# EUROPEAN PATENT APPLICATION

(11) **EP 4 589 551 A1**
(43) Date of publication of application: **23.07.2025**
(21) Application number: 23891829.6
(22) Date of filing: 13.10.2023
(51) Int. Cl.: G06V 30/19, G06V 30/148, G06V 30/164

(54) **ELECTRONIC DEVICE AND OPERATION METHOD THEREOF**

(30) Priority: 15.11.2022 KR 20220152736
(71) Applicant: Samsung Electronics Co., Ltd., Suwon-si, Gyeonggi-do 16677 (KR)
(72) Inventor: CHOI, Jinwuk, Suwon-si, Gyeonggi-do 16677 (KR); KIM, Byounghyun, Suwon-si, Gyeonggi-do 16677 (KR); PARK, Youngin, Suwon-si, Gyeonggi-do 16677 (KR); LEE, Sangyoung, Suwon-si, Gyeonggi-do 16677 (KR); HAHM, Cheulhee, Suwon-si, Gyeonggi-do 16677 (KR)
(74) Representative: Gulde & Partner
(86) International application number: PCT/KR2023/015854
(87) International publication number: WO 2024/106761

(57) **Abstract**

Provided is an electronic device for identifying output content. The electronic device includes: a display; a memory storing at least one instruction; and at least one processor configured to execute the at least one instruction to: recognize a text in an image output through the display, obtain valid data from the recognized text, obtain comparison data for each title of a plurality of titles in a title list, identify comparison data that matches the valid data from among the obtained comparison data, and provide additional information based on a title corresponding to the identified comparison data.

## Description

### [Technical Field]

The disclosure relates to an electronic device and an operation method thereof, and more particularly, to an electronic device for identifying content output by the electronic device, and an operation method of the electronic device.

### [Background Art]

Electronic devices may output various types of content in addition to broadcast content. For example, electronic devices may receive and output various types of content from external devices.

An artificial intelligence (AI) system refers to a system that enables machines to derive desired results or perform desired operations by learning and making decisions on their own.

### [Disclosure]

### [Technical Solution]

An electronic device according to an embodiment of the disclosure may include a display, a memory storing at least one instruction, and at least one processor configured to execute the at least one instruction stored in the memory.

In an embodiment of the disclosure, the at least one processor may be configured to execute the at least one instruction to recognize a text in an image output through the display.

In an embodiment of the disclosure, the at least one processor may be further configured to execute the at least one instruction to obtain valid data from the recognized text.

In an embodiment of the disclosure, the at least one processor may be further configured to execute the at least one instruction to obtain comparison data for each title of a title list including a plurality of titles.

In an embodiment of the disclosure, the at least one processor may be further configured to execute the at least one instruction to identify comparison data that matches the valid data from among the obtained comparison data.

In an embodiment of the disclosure, the at least one processor may be further configured to execute the at least one instruction to provide additional information based on a title corresponding to the identified comparison data.

### [Description of Drawings]

The above and other aspects, features, and advantages of certain embodiments of the present disclosure will be more apparent from the following description taken in conjunction with the accompanying drawings, in which:
FIG. 1 is a diagram of an electronic device for identifying content from an output image and providing additional information based on a result of the identifying, according to an embodiment;
FIG. 2 is an internal block diagram of an electronic device according to an embodiment;
FIG. 3 is an internal block diagram of an electronic device according to an embodiment;
FIG. 4 is an internal block diagram of a processor of an electronic device according to an embodiment;
FIG. 5 is a diagram of an electronic device recognizing a text in a captured image, according to an embodiment;
FIG. 6 is a diagram of titles in various styles included in images, according to an embodiment;
FIG. 7 is a diagram of an electronic device obtaining first valid data, according to an embodiment;
FIG. 8 is a diagram of an electronic device obtaining first comparison data and comparing the first comparison data with first valid data, according to an embodiment;
FIG. 9 is a diagram of an electronic device obtaining first valid data by considering confidence values, according to an embodiment;
FIG. 10 is a diagram of an electronic device obtaining second valid data and second comparison data and matching the second valid data with the second comparison data, according to an embodiment;
FIG. 11 is an internal block diagram of an electronic device according to an embodiment;
FIG. 12 is a diagram of an electronic device providing additional information based on an identified title, according to an embodiment;
FIG. 13 is a flowchart illustrating a method of operating an electronic device, according to an embodiment;
FIG. 14 is a flowchart illustrating a method of comparing first valid data with first comparison data, performed by an electronic device, according to an embodiment; and
FIG. 15 is a flowchart illustrating a method of comparing second valid data with second comparison data, performed by an electronic device, according to an embodiment.

### [Mode for Invention]

An operation method of an electronic device according to an embodiment of the disclosure may include recognizing a text in an output image.

**In** an embodiment of the disclosure, the operation method of the electronic device may further include obtaining valid data from the recognized text.

**In** an embodiment of the disclosure, the operation method of the electronic device may further include obtaining comparison data for each title of a title list including a plurality of titles.

**In** an embodiment of the disclosure, the operation method of the electronic device may further include identifying comparison data that matches the valid data from among the obtained comparison data.

**In** an embodiment of the disclosure, the operation method of the electronic device may further include providing additional information based on a title corresponding to the identified comparison data.

A recording medium according to an embodiment of the disclosure may be a computer-readable recording medium having recorded thereon a program for causing a computer to execute an operation method of an electronic device, and the operation method may include recognizing a text in an output image.

In an embodiment of the disclosure, the operation method may further include obtaining valid data from the recognized text.

In an embodiment of the disclosure, the operation method may further include obtaining comparison data for each title of a title list including a plurality of titles.

In an embodiment of the disclosure, the operation method may further include identifying comparison data that matches the valid data from among the obtained comparison data.

In an embodiment of the disclosure, the operation method may further include providing additional information based on a title corresponding to the identified comparison data.

Hereinafter, an embodiment of the disclosure will be described in detail with reference to the accompanying drawings to enable those of ordinary skill in the art to perform the disclosure without any difficulty. The disclosure may, however, be embodied in many different forms and should not be construed as being limited to an embodiment of the disclosure set forth herein.

Although the terms used herein are generic terms, which are currently widely used and are selected by taking into consideration functions thereof, the meanings of the terms may vary according to intentions of those of ordinary skill in the art, legal precedents, or the advent of new technology. Thus, the terms should be defined not by simple appellations thereof but based on the meanings thereof and the context of descriptions throughout the disclosure.

In addition, terms used herein are for describing a particular embodiment of the disclosure, and are not intended to limit the scope of the disclosure.

Throughout the disclosure, the expression "at least one of a, b, or c" indicates only a, only b, only c, both a and b, both a and c, both b and c, all of a, b, and c, or variations thereof.

Throughout the disclosure, when a part is referred to as being "connected to" another part, it may be "directly connected to" the other part or be "electrically connected to" the other part through an intervening element.

The term "the" and other demonstratives similar thereto in the specification (especially in the following claims) should be understood to include a singular form and plural forms. In addition, when there is no description explicitly specifying an order of operations of a method according to the disclosure, the operations may be performed in an appropriate order. The disclosure is not limited to the described order of the operations.

As used herein, phrases such as "in some embodiments" or "in an embodiment" does not necessarily indicate the same embodiment.

Some embodiments of the disclosure may be represented by block components and various process operations. Some or all of the functional blocks may be implemented by any number of hardware and/or software elements that perform particular functions. For example, the functional blocks of the disclosure may be embodied by at least one microprocessor or by circuit components for a certain function. In addition, for example, the functional blocks of the disclosure may be implemented by using various programming or scripting languages. The functional blocks may be implemented by using various algorithms executable by at least one processor. Furthermore, the disclosure may employ known technologies for electronic settings, signal processing, and/or data processing. Terms such as "mechanism", "element", "unit", or "component" may be used in a broad sense and are not limited to mechanical or physical components.

In addition, connection lines or connection members between components illustrated in the drawings are merely exemplary of functional connections and/or physical or circuit connections. Various alternative or additional functional connections, physical connections, or circuit connections between components may be present in a practical device.

In addition, as used herein, the terms such as "...er (or)", "... unit", "... module", etc., denote a unit that performs at least one function or operation, which may be implemented as hardware or software or a combination thereof.

In addition, as used herein, the term "user" refers to a person who uses an electronic device, and may include a consumer, an evaluator, a viewer, an administrator, or an installer.

Hereinafter, embodiments of the present disclosure will be described in detail with reference to the accompanying drawings, where similar reference characters denote corresponding features consistently throughout.

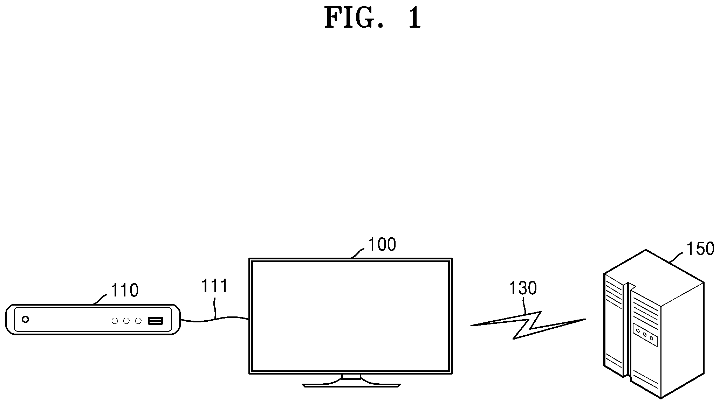

FIG. 1 is a diagram of an electronic device 100 for identifying content from an output image and providing additional information based on a result of the identifying, according to an embodiment.

In an embodiment, the electronic device 100 may be an image display device including a display. Although FIG. 1 illustrates an embodiment in which the electronic device 100 is a television, the disclosure is not limited thereto.

In an embodiment, the electronic device 100 may be connected to an external device 110 physically separated from the electronic device 100.

The external device 110 may be a source device. FIG. 1 illustrates an example in which the external device 110 is a game console, but the external device 110 is not limited thereto. For example, the external device 110 may be implemented as various types of source devices, such as a personal computer (PC), a set-top box, a Blu-ray disc player, a mobile phone, a home theater system, an audio player, or a Universal Serial Bus (USB) device, in addition to a game console.

The external device 110 may be connected to the electronic device 100 through a wire to transmit multimedia signals to the electronic device 100. As illustrated in FIG. 1, the electronic device 100 may be connected to the external device 110 through a cable 111. For example, the electronic device 100 may be connected to the external device 110 by using a port for simultaneously transmitting a video signal and an audio signal, such as a high-definition multimedia interface (HDMI) port. In an embodiment, the electronic device 100 may be connected to the external device 110 by using a port for separately transmitting a video signal and an audio signal.

In an embodiment, the electronic device 100 may be wirelessly connected to the external device 110 through a wireless network that complies with a communication standard such as Bluetooth, wireless local area network (WLAN) (e.g., Wi-Fi), wireless broadband (WiBro), Worldwide Interoperability for Microwave Access(WiMAX), code-division multiple access (CDMA), or wideband CDMA (WCDMA).

In an embodiment, the electronic device 100 may identify content that has been received from the external device 110 and is currently output. For example, the electronic device 100 may identify a title of the currently output content.

In an embodiment, the electronic device 100 may be a smart television (TV). The term 'smart TV' may refer to a digital TV equipped with an operating system (OS) and an Internet access function. Smart TVs may also be referred to as Internet TVs, connected TVs, or hybrid TVs. In an embodiment, the electronic device 100 may access the Internet to provide a web surfing service, a social network service, or the like. In an embodiment, the electronic device 100 may stream and output various types of video-on-demand (VOD) content generated by an over-the-top (OTT) service provider.

In a case in which the electronic device 100 is a smart TV and executes an app by using an OS and an Internet function equipped therein, the electronic device 100 is able to identify the type of the currently running app. However, in a case in which the electronic device 100 receives and outputs content from the external device 110 instead of executing an app installed therein, the electronic device 100 is unable to identify the title of the content received from the external device 110 and currently output on a screen.

In an embodiment, the electronic device 100 may capture an image output to a user through a screen, in order to identify the title of the currently output content.

In an embodiment, the electronic device 100 may capture the screen of the electronic device 100 at preset periods, for example, at preset time intervals, at preset time points, or at random time intervals.

In an embodiment, the electronic device 100 may analyze the captured image to identify content currently being used by the user. To this end, in an embodiment, the electronic device 100 may detect a text region in the captured image. In addition, in an embodiment, the electronic device 100 may recognize a text included in the detected text region.

In an embodiment, the electronic device 100 may obtain valid data from the recognized text. The valid data refers to information used for matching with a content list, and may be obtained by the electronic device 100 preprocessing a text recognized from the screen.

In an embodiment, the electronic device 100 may remove terms commonly used in the content, before obtaining the valid data from the recognized text. For example, in a case in which the content is game content, the electronic device 100 may remove game terms from a text recognized in a screen of the game content.

For example, in a case in which a text detected and recognized by the electronic device 100 in a captured image is a game term such as 'game start', 'game play', or 'stop', which is commonly used in game content, the electronic device 100 may not generate valid data for the game term.

In an embodiment, the electronic device 100 may obtain valid data from a text other than game terms.

In an embodiment, the electronic device 100 may obtain at least one of first valid data or second valid data, from the recognized text.

In an embodiment, the electronic device 100 may remove special characters and numeric characters from the recognized text, in order to obtain the first valid data. In an embodiment, the electronic device 100 may convert characters included in the recognized text to upper case. In an embodiment, the electronic device 100 may obtain the first valid data including one or more words by splitting the recognized text into words by using spaces as separators, and then removing words having a small number of characters.

In an embodiment, the electronic device 100 may obtain a confidence value for each character of a word included in the first valid data. In an embodiment, the confidence value may refer to a probability value representing the degree to which the character is accurately recognized. In an embodiment, the electronic device 100 may compare each word included in the first valid data with first comparison data, by considering a character having a confidence value less than a reference value as matching all characters. To this end, in an embodiment, when obtaining the first valid data, the electronic device 100 may convert a character having a confidence value less than or equal to the reference value to a particular symbol. In an embodiment, the electronic device 100 may compare a word included in the first valid data with words included in the first comparison data, by considering the particular symbol of the word included in the first valid data as matching all characters.

In an embodiment, the electronic device 100 may obtain a confidence value for each character of the word included in the first valid data only when the average of confidence values of the characters of the word is greater than or equal to a reference average value.

When the overall reliability of a word is high and only one character or a small number of characters of the word are incorrect, the electronic device 100 may include the word in the first valid data rather than omitting the word so as to use the word for matching with the comparison data.

In addition, when the average confidence value of a word is less than the reference average value, the electronic device 100 may not include the word in the first valid data, such that a word with low reliability is not used for matching with the first comparison data.

In an embodiment, the electronic device 100 may obtain second valid data.

In an embodiment, the electronic device 100 may remove special characters and numeric characters included in a recognized text, in order to obtain the second valid data. In an embodiment, the electronic device 100 may convert characters included in the recognized text to upper case. In an embodiment, the electronic device 100 may obtain the second valid data by removing spaces included in the recognized text to concatenate characters.

In an embodiment, a content list may be stored in the electronic device 100. In an embodiment, the content list may include a content title list. The content list may be classified by content type. For example, a content list for a content type of 'game' may include a game title list. In addition, a content list for a content type of 'movie' or 'drama' may include a movie or drama title list. In addition, a content list for a content type of 'entertainment program' may include an entertainment program title list.

In an embodiment, the electronic device 100 may store a content title list downloaded from an external server . For example, in FIG. 1, the electronic device 100 may store a game title list.

In an embodiment, the electronic device 100 may obtain comparison data from a content list. In an embodiment, the comparison data may be information used for matching with valid data. The electronic device 100 may obtain comparison data by preprocessing a title list. In an embodiment, the electronic device 100 may obtain comparison data for each title included in the title list. For example, in FIG. 1, the electronic device 100 may obtain comparison data for each game title included in the game title list.

In an embodiment, the electronic device 100 may obtain at least one of first comparison data or second comparison data for each title from the title list.

In an embodiment, the electronic device 100 may remove special characters and numeric characters included in a title in order to obtain the first comparison data. In an embodiment, the electronic device 100 may convert characters included in the title to upper case. In an embodiment, the electronic device 100 may obtain the first comparison data including one or more words, by removing words with N or fewer characters from a plurality of words included in the title.

In an embodiment, the electronic device 100 may remove special characters and numeric characters included in the title in order to obtain the second comparison data. In an embodiment, the electronic device 100 may convert characters included in the title to upper case. In an embodiment, the electronic device 100 may obtain the second comparison data by removing spaces between the plurality of words included in the title to concatenate the plurality of words.

In an embodiment, the electronic device 100 may compare valid data and the comparison data.

In an embodiment, the electronic device 100 may compare the first valid data with the first comparison data to obtain information indicating a matching degree between the first valid data and the first comparison data. Hereinafter, the information indicating the matching degree between the first valid data and the first comparison data will be referred to as first matching information.

In an embodiment, the electronic device 100 may compare the second valid data with the second comparison data to obtain information indicating a matching degree between the second valid data and the second comparison data. Hereinafter, the information indicating the matching degree between the second valid data and the second comparison data will be referred to as second matching information.

In an embodiment, the electronic device 100 may identify comparison data that matches the valid data, based on at least one of the first matching information or the second matching information.

In an embodiment, the electronic device 100 may identify, from among the obtained comparison data, comparison data that matches the valid data. In an embodiment, the electronic device 100 may identify a title corresponding to the identified comparison data.

In an embodiment, the electronic device 100 may provide additional information corresponding to the identified title.

In an embodiment, the electronic device 100 may transmit the corresponding title to a server 150 through a communication network 130. The server 150 may be the same server as the external server from which the electronic device 100 downloads the content list, or may be a separate server.

In an embodiment, the server 150 may use the corresponding title to identify the user's preference, and in response to the preference, search for other content that may be recommended to the user. For example, in FIG. 1, the server 150 may search for another game title that may be preferred by the user, based on the title of the game being currently used by the user.

In an embodiment, the server 150 may obtain search information obtained by performing a search with the title of the game being used by the user. The search information may include, for example, a video showing other users playing the game, a video showing a famous professional gamer playing the game, a live streaming video showing users currently playing the game in real time, and various pieces of content information related to the game content.

In an embodiment, the server 150 may transmit, to the electronic device 100 through the communication network 130, additional information including at least one of recommendation information or search information obtained based on the title of the game being currently used by the user.

In an embodiment, the electronic device 100 may receive, from the server 150, the additional information corresponding to the title and output the additional information.

As such, according to an embodiment, the electronic device 100 may more accurately identify content currently being used by the user, by using a plurality of pieces of valid data and a plurality of pieces of comparison data.

In addition, according to an embodiment, the electronic device 100 may provide an additional service to the user by using the identified content to provide additional information to the user.

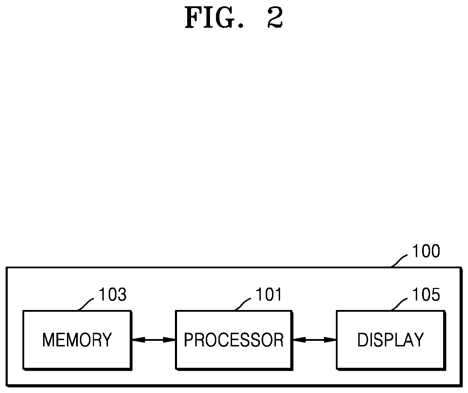

FIG. 2 is an internal block diagram of the electronic device 100 according to an embodiment.

Referring to FIG. 2, the electronic device 100 may include a processor 101, a memory 103, and a display 105.

In an embodiment, the electronic device 100 may be an image display device including a display. The electronic device 100 may be stationary or mobile, and may be a digital broadcast receiver capable of receiving a digital broadcast signal, but is not limited thereto.

For example, the electronic device 100 may include at least one of a desktop computer, a smart phone, a tablet PC, a mobile phone, a video phone, an e-book reader, a laptop PC, a netbook computer, a digital camera, a personal digital assistant (PDA), a portable multimedia player (PMP), a camcorder, a navigation device, a wearable device, a smart watch, a home network system, a security system, or a medical device.

The electronic device 100 may be implemented as a flat display device, a curved display device with a screen having a curvature, or a flexible display device having an adjustable curvature. The electronic device 100 may include, for example, high definition (HD), full HD, ultra HD, or a higher resolution than ultra HD.

The electronic device 100 may output various types of content provided by content providers. The content may include a video such as a still image or a moving image, an audio, a subtitle, other additional information, and the like. The content provider may refer to a content production company, a terrestrial broadcasting station, a cable broadcasting station, a satellite broadcasting station, an Internet protocol TVE (IPTV) service provider, or an OTT service provider that provides various pieces of contents to consumers. The content provider may produce various types of content, such as dramas, movies, entertainment programs, news, games, or audio.

The memory 103 according to an embodiment of the disclosure may store at least one instruction. The memory 103 may store at least one program executable by the processor 101. Also, the memory 103 may store data input to or output from the electronic device 100.

The memory 103 may include at least one of a flash memory-type storage medium, a hard disk-type storage medium, a multimedia card micro-type storage medium, a card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disk, or an optical disc.

In an embodiment, the memory 103 may store one or more instructions for capturing an image output by the display 105.

In an embodiment, the memory 103 may store one or more instructions for recognizing a text in a captured image.

In an embodiment, the memory 103 may store at least one artificial intelligence (AI) model (e.g., a neural network model). In an embodiment, the neural network model stored in the memory 103 may include at least one of a first neural network for detecting a text region from an image, or a second neural network for recognizing a text in a text region.

In an embodiment, the memory 103 may store one or more instructions for obtaining valid data from a recognized text.

In an embodiment, the memory 103 may store one or more instructions for removing game terms from a recognized text and obtaining valid data from a text not including the game terms.

In an embodiment, the memory 103 may store title lists each including a plurality of titles. The title lists may include lists of titles of pieces of content belonging to the respective content types. For example, a title list of a content type of 'game' may include a list of titles of game content.

In an embodiment, the memory 103 may store one or more instructions for obtaining comparison data for each title included in the title list.

In an embodiment, the memory 103 may store one or more instructions for obtaining first valid data.

In an embodiment, the memory 103 may store one or more instructions for obtaining a confidence value indicating whether each character of a word included in the first valid data is correct.

In an embodiment, the memory 103 may store one or more instructions for converting a character having a confidence value less than or equal to a reference value, to a particular symbol.

In an embodiment, the memory 103 may store one or more instructions for comparing a word included in the first valid data with words of first comparison data by considering the particular symbol as matching all characters.

In an embodiment, the memory 103 may store one or more instructions for identifying whether the average of confidence values of the characters of a word included in the first valid data is greater than or equal to a reference average value.

In an embodiment, the memory 103 may store one or more instructions for comparing a word included in the first valid data with the first comparison data only when the average of the confidence values of the characters of the word included in the first valid data is greater than or equal to the reference average value.

In an embodiment, the memory 103 may store one or more instructions for obtaining second valid data.

In an embodiment, the memory 103 may store one or more instructions for obtaining first comparison data.

In an embodiment, the memory 103 may store one or more instructions for obtaining second comparison data.

In an embodiment, the memory 103 may store one or more instructions for identifying, from among the obtained comparison data, comparison data that matches valid data.

In an embodiment, the memory 103 may store one or more instructions for obtaining first matching information indicating a matching degree between the first valid data and the first comparison data.

In an embodiment, the memory 103 may store one or more instructions for obtaining second matching information indicating a matching degree between the second valid data and the second comparison data.

In an embodiment, the memory 103 may store one or more instructions for identifying comparison data that matches the valid data, based on at least one of the first matching information or the second matching information.

In an embodiment, the memory 103 may store one or more instructions for identifying a title corresponding to the identified comparison data.

In an embodiment, the memory 103 may store one or more instructions for providing additional information corresponding to the identified title.

In an embodiment, the processor 101 controls the overall operation of the electronic device 100. The processor 101 may execute one or more instructions stored in the memory 103 to control the electronic device 100 to function. In an embodiment, the processor 101 may include a plurality of processors (e.g., a plurality of cores and/or a plurality of different processors).

In an embodiment, the processor 101 may execute one or more instructions to capture an image output by the display 105.

In an embodiment, the processor 101 may execute one or more instructions to detect a text region in a captured image and recognize a text included in the detected text region.

In an embodiment, the processor 101 may generate output data from input data by using a plurality of AI models.

In an embodiment, the processor 101 may detect a text region in an image by using the first neural network stored in the memory 103.

In an embodiment, the processor 101 may recognize a text included in a text region by using the second neural network stored in the memory 103.

In an embodiment, the processor 101 may execute one or more instructions to obtain valid data from a recognized text. In an embodiment, the processor 101 may obtain at least one of first valid data or second valid data by preprocessing a recognized text.

In an embodiment, the processor 101 may obtain first valid data and second valid data by preprocessing a recognized text in different ways.

In an embodiment, the processor 101 may execute one or more instructions to remove game terms from a recognized text and obtain valid data from the text not including the game terms.

In an embodiment, the processor 101 may execute one or more instructions to obtain first valid data including one or more words by removing special characters and numeric characters from a recognized text, converting characters included in the recognized text to upper case, splitting the recognized text into words by using spaces as separators, and removing words with N or fewer characters.

In an embodiment, the processor 101 may execute one or more instructions to obtain a confidence value indicating whether each character of a word included in the first valid data is correct.

In an embodiment, the processor 101 may compare each word included in the first valid data with the first comparison data, by considering a character having a confidence value less than a reference value as matching all characters.

In an embodiment, the processor 101 may execute one or more instructions to identify whether the average of the confidence values of the characters of a word included in the first valid data is greater than or equal to a reference average value.

In an embodiment, the processor 101 may compare a word included in the first valid data with the first comparison data only when the average of the confidence values of the characters of the word included in the first valid data is greater than or equal to the reference average value.

In an embodiment, the processor 101 may obtain second valid data by removing special characters and numeric characters included in the recognized text, converting characters included in the recognized text to upper case, and removing spaces included in the recognized text to concatenate the characters.

In an embodiment, the processor 101 may execute one or more instructions to obtain comparison data for each title included in a title list including a plurality of titles.

In an embodiment, the processor 101 may obtain first comparison data and second comparison data by preprocessing the title in different ways.

In an embodiment, the processor 101 may execute one or more instructions to may obtain the first comparison data including one or more words by removing special characters and numeric characters included in the title, converting characters included in the title to upper case, and removing words with N or fewer characters from a plurality of words included in the title.

In an embodiment, the processor 101 may execute one or more instructions to may obtain the second comparison data by removing special characters and numeric characters included in the title, converting characters included in the title to upper case, and removing spaces between the plurality of words included in the title to concatenate the plurality of words.

In an embodiment, the processor 101 may execute one or more instructions to compare the first valid data with the first comparison data to obtain first matching information indicating a matching degree between the first valid data and the first comparison data.

In an embodiment, the processor 101 may execute one or more instructions to compare the second valid data with the second comparison data to obtain second matching information indicating a matching degree between the second valid data and the second comparison data.

In an embodiment, the processor 101 may execute one or more instructions to identify comparison data that matches the valid data, based on at least one of the first matching information or the second matching information.

In an embodiment, the processor 101 may execute one or more instructions to provide additional information corresponding to the identified comparison data.

In an embodiment, the display 105 may output content received from the external device 110. The display 105 may include at least one of a liquid-crystal display, a thin-film-transistor liquid-crystal display, an organic light-emitting diode, a flexible display, a three-dimensional (3D) display, or an electrophoretic display. In an embodiment, the display 105 may include at least two displays according to their implementation type. In a case in which the display 105 is implemented as a touch screen, the display 105 may be used as an input device, such as a user interface, in addition to being used as an output device.

In an embodiment, the content output by the display 105 may include information indicating the title of the content.

In an embodiment, the display 105 may output additional information obtained by using the title included in the content.

In an embodiment, the display 105 may output the content and the additional information through one screen. For example, the display 105 may output the content and the additional information in a multi-view manner through a partial screen.

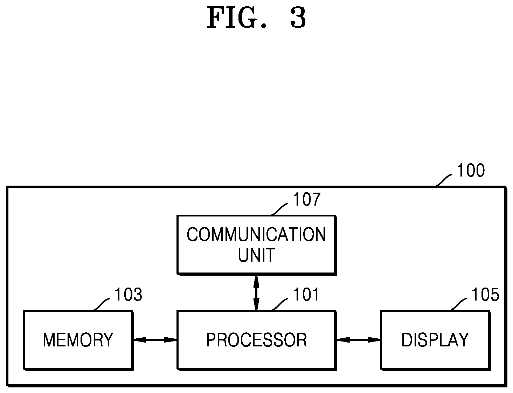

FIG. 3 is an internal block diagram of the electronic device 100 according to an embodiment.

Referring to FIG. 3, the electronic device 100 may further include a communication unit 107 in addition to the processor 101, the memory 103, and the display 105. The electronic device 100 of FIG. 3 may be an example of the electronic device 100 of FIG. 2. Hereinafter, descriptions that are provided above with reference to FIG. 2 will be omitted.

In an embodiment, the processor 101 may control the overall operation of the electronic device 100.

In an embodiment, the memory 103 may store one or more instructions for the electronic device 100 to operate.

In an embodiment, the display 105 may output content received from the external device 110.

In an embodiment, the communication unit 107 to an embodiment of the disclosure may connect the electronic device 100 to the external device 110, the server 150, a peripheral device, or other external devices, under control of the processor 101. In an embodiment, the communication unit 107 may connect the electronic device 100 to the external device 110 or the server 150 by using a wired or wireless communication network.

In an embodiment, the communication unit 107 may include at least one communication module capable of performing at least one of wired communication or wireless communication with the external device 110, the server 150, or an external server.

In an embodiment, the communication unit 107 may include a WLAN module, a Bluetooth module, or at least one communication module for transmitting and receiving signals through in a wired manner, according to the performance and structure of the electronic device 100.

For example, the communication unit 107 may include a wireless communication module for transmitting and receiving data through a wireless network conforming to a communication standard such as Bluetooth, WLAN (e.g., Wi-Fi), WiBro, WiMAX, CDMA, or WCDMA, and thus may be wirelessly connected to the external device 110, the server 150, or other external devices.

For example, the communication unit 107 may include a port for simultaneously transmitting a video signal and an audio signal, such as a USB port, an HDMI port, a DisplayPort (DP) port, or a Thunderbolt^{™} port, or a port for separately transmitting a video signal and an audio signal, and thus may be connected to the external device 110, the server 150, or other external devices in a wired manner.

In an embodiment, the electronic device 100 may receive a content list from the server 150 through the communication unit 107 or from another external server separate from the server 150. The content list may include a title list. The title list may be a list including a plurality of titles.

In an embodiment, the electronic device 100 may receive content from the external device 110 through the communication unit 107 and output the content.

In an embodiment, the electronic device 100 may transmit a title to the server 150 through the communication unit 107 and receive additional information from the server 150.

The communication unit 107 may receive a control signal through a control device such as a remote controller, under control of the processor 101. The control signal may be implemented as a Bluetooth type, a radio frequency (RF) signal type, or a Wi-Fi type.

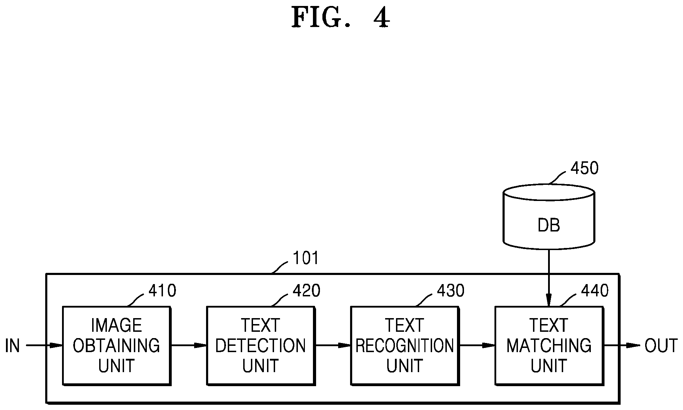

FIG. 4 is an internal block diagram of the processor 101 of the electronic device 100 according to an embodiment.

The processor 101 illustrated in FIG. 4 may be an example of the processor 101 included in the electronic device 100 of FIG. 2 or 3. Hereinafter, descriptions that are provided above with reference to FIG. 2 or 3 will be omitted.

Referring to FIG. 4, in an embodiment, the processor 101 may include an image obtaining unit 410, a text detection unit 420, a text recognition unit 430, and a text matching unit 440.

In an embodiment, the image obtaining unit 410, the text detection unit 420, the text recognition unit 430, and the text matching unit 440 may be included in the processor 101 in the form of modules. The term 'module' may refer to a functional and structural combination of hardware for performing the technical spirit of the disclosure and software for driving the hardware. For example, the term 'module' may refer to a logical unit including certain code and a hardware resource for executing the code, and may not necessarily refer to physically connected code or be limited to one type of hardware.

The content output by the electronic device 100 may include a title of the content. For example, when the content starts or ends, the title of the content may be displayed on the screen.

In an embodiment, the image obtaining unit 410 may receive an image output through a screen as an input IN**,** and capture an image at preset periods. In an embodiment, the image obtaining unit 410 may capture a content screen including the title by capturing an image at preset time intervals, at preset time points, or at random time intervals. For example, the image obtaining unit 410 may capture a red-green-blue (RGB) image output to the user through the display 105, every 0.5 seconds.

In an embodiment, the text detection unit 420 may detect a text region from the captured image.

In an embodiment, the text recognition unit 430 may recognize characters from the text region.

In an embodiment, the electronic device 100 may be an edge device in which an artificial intelligence (AI) function is attached to a device that outputs an image.

The AI technology may include machine learning (deep learning) and element techniques utilizing machine learning. The AI technology may be implemented by using algorithms. Here, an algorithm or a set of algorithms for implementing the AI technology is refer to as a neural network. The neural network may receive input data, perform computations for analysis and classification, and output resulting data. In order for the neural network to accurately output resulting data corresponding to input data, it is necessary to train the neural network. Training a neural network means that an AI model with desired characteristics is generated by applying a learning algorithm to a plurality of pieces of training data. In an embodiment, such training may be performed by the electronic device 100 that performs AI, or by a separate server/system.

Here, the learning algorithm is a method of training a certain target device (e.g., a robot) by using a plurality of pieces of training data to allow the target device to make a decision or make a prediction by itself. Examples of the learning algorithm include supervised learning, unsupervised learning, semi-supervised learning, or reinforcement learning, and a learning algorithm in an embodiment is not limited to the above-described examples except in cases in which it is specified.

A set of algorithms for outputting output data corresponding to input data through the neural network, or software and/or hardware for executing the set of algorithms may be referred to as an 'AI model' (or an 'artificial intelligence model', a 'neural network model', or a 'neural network').

In an embodiment, the electronic device 100 may detect and recognize a text in an image by using on-device AI technology. In an embodiment, the electronic device 100 collects, calculates, and processes information on its own without accessing a cloud server, and thus may more quickly detect a text from an image and more quickly recognize the detected text.

In an embodiment, the electronic device 100 may include an on-device AI operation unit configured to process data by using the on-device AI technology. The on-device AI operation unit may also be referred to as an on-device learning system.

In an embodiment, the on-device AI operation unit may include the text detection unit 420 and the text recognition unit 430.

In an embodiment, the text detection unit 420 may detect a text region from a captured image by using a neural network. Hereinafter, a neural network trained to obtain information about a text region from an image will be referred to as a first neural network.

In an embodiment, the text detection unit 420 may be an algorithm for obtaining a text region in an image by using the first neural network, a set of such algorithms, or software and/or hardware for executing the set of algorithms.

In an embodiment, the first neural network may be a deep neural network (DNN) including two or more hidden layers.

In an embodiment, the first neural network may be trained to receive input data, perform computations for analysis and classification, and output resulting data corresponding to the input data.

In an embodiment, the first neural network may be trained to obtain a text region, by receiving images including various texts as a plurality of pieces of training data and applying a learning algorithm to the plurality of pieces of training data. Such training may be performed by the electronic device 100 that performs AI, or by a separate external server/system.

In an embodiment, the text detection unit 420 may process input data according to a predefined operation rule or an AI model. The predefined operation rule or AI model may be generated by using a particular algorithm. In addition, the AI model may be trained to perform a particular algorithm.

In an embodiment, the first neural network may detect a text region in an image by using various methods such as bounding box regression, part, segmentation, or fast scene text detection.

Deep learning models using bounding box regression include TextBoxes, TextBoxes++, DMPNet, SSTD, RRD, EAST, and DeRPN, and this method may be a method of performing regression to obtain the coordinates of a bounding box that provides the position of a text region.

A part-based method is a method of detecting a single word or character line by connecting small parts of text instances, and deep learning models using the part-based method include SegLink and SegLink++.

Segmentation is a method of recognizing characters through prediction in pixel units to obtain bounding box information, and deep learning models using this method include Mask TextSpotter, PSENet, TextSnake, and Pixellink.

Fast scene text detection is a method developed with an emphasis on accuracy and prediction speed, and deep learning models using this method include TextBoxes, TextBoxes++, SegLink, RRD, EAST, DBNet, DENet++, and CentripetalText (CT).

In an embodiment, the text detection unit 420 may receive a captured image from the image obtaining unit 410, resize the image to fit a model, and use the resized image as input data of the first neural network.

In an embodiment, the first neural network may detect a text region from input data and obtain the position of the text region in the image as coordinate values. The coordinate values obtained by the first neural network from the image may represent the position of the text region and the horizontal and vertical lengths of a box surrounding the text region, with respect to (0,0) that represents the uppermost-leftmost point of the image. For example, the first neural network may obtain a plurality of text regions detected in an image as coordinate values such as (x, y, w, h). Here, x and y represent the coordinate values of the text region in the image, that is, the starting point of a bounding box surrounding a text, and w and h represent the horizontal and vertical lengths (e.g., the width and height) of the bounding box.

In an embodiment, the text detection unit 420 may obtain coordinate values representing the position of a bounding box for each text and transmit the coordinate values to the text recognition unit 430.

In an embodiment, the text recognition unit 430 may receive the coordinate values of the bounding box for each text from the text detection unit 420 and recognize the text included in the text region.

In an embodiment, the text recognition unit 430 may recognize the text in the text region by using a neural network. Hereinafter, a neural network trained to recognize a text in a text region will be referred to as a second neural network.

In an embodiment, the second neural network may be an algorithm for recognizing a text included in a text region, a set of such algorithms, or software and/or hardware for executing the set of algorithms.

In an embodiment, the second neural network may be trained to recognize a text, by receiving images including various texts as a plurality of pieces of training data and applying a learning algorithm to the plurality of pieces of training data. Such training may be performed by the electronic device 100 that performs AI, or by a separate external server/system.

In an embodiment, the second neural network may be a DNN including two or more hidden layers.

In an embodiment, the second neural network may include a structure in which input data is processed through the hidden layers and the processed data is output. Each layer of the second neural network is represented by at least one node, and nodes between layers are connected to each other by edges.

The DNN is a neural network that performs computations through a plurality of layers, and the depth of the network may increase according to the number of internal layers that perform the computations. In addition, DNN computations may include convolutional neural network (CNN) computations and the like.

In an embodiment, values of nodes included in the second neural network may be trained to have different weights according to training data. Nodes representing the plurality of layers included in the second neural network may be trained to have different weights according to training data, and connection strength between the nodes may vary. For example, a CNN-based neural network may include an input layer (a first convolutional layer), a first pooling layer, a second convolutional layer, a second pooling layer, a hidden layer, and an output layer. Each of a plurality of layers constituting the CNN-based neural network may include one or more nodes that receive data. Each node has a corresponding weight value, and thus, output data may be obtained based on a value obtained by performing a computation, for example, multiplication, on an input signal and a weight value. The depths of the convolutional layer and the pooling layer or the depth of the hidden layer may vary. As the depths of the convolution layer and the pooling layer increase, more accurate output data may be obtained, but the amount of computation may increase and the processing speed may decrease.

In an embodiment, the second neural network may recognize a detected character and convert the character into a digital text format. The second neural network may recognize a text by using at least one of a method of recognizing individual characters or a method of recognizing words.

In an embodiment, the second neural network may extract the characteristics of a character image by using a CNN and recognize a character by using a long short-term memory (LSTM) or a recurrent model with a gated recurrent unit.

Because a word is composed of a sequence of individual characters, the second neural network may use connectionist temporal classification (CTC) capable of predicting the sequence, as a loss function.

In an embodiment, the second neural network may derive a character recognition result on an input character image, after performing computations with a CNN and CTC to recognize a character based on the CTC.

In an embodiment, in the second neural network, recurrent neural network (RNN) computations may be added between the CNN and the CTC in the above-mentioned method, that is, the method in which computations are performed by using the CNN and the CTC, in order to more accurately extract the context of characters. The second neural network may extract features from an input character image by using a CNN and identify conditional probabilities of a sequence predicted through an RNN and CTC computation process and a target sequence.

In an embodiment, the second neural network may use an attention mechanism used in machine translation, to enhance deep features. For example, an encoder of the second neural network may extract one-dimensional (1D)-features of a character image input through the CNN and the RNN and input the 1D-features to a decoder, and the decoder may derive a character recognition result through sequential computations with 1D-attention and an RNN.

In an embodiment, the second neural network may perform attention-based sequence prediction to fix the length of a sentence and predict a label of a corresponding character based on attention to an input feature. The second neural network may estimate a character label by using an RNN. That is, the second neural network may estimate a label of a first character based on the attention to the input feature, and use the estimated label as an input again to estimate the next character. When the number of characters of words extracted by the second neural network is less than the number of characters extracted by the second neural network, the second neural network may use a predetermined token in spaces between the words. In an embodiment, the second neural network may output a label of each character and a confidence value indicating the accuracy of the label of the character.

In an embodiment, the second neural network may perform text recognition by using a transformer model. In an embodiment, the second neural network may utilize a transformer to recognize characters by utilizing attention in a two-dimensional (2D) space. The second neural network may generate self-attention from an input through the concepts of query, key, and value, and based on the self-attention, assign weights to important features in the input. The attention may give a high weight to a state of the encoder that is important in the current position of the decoder.

In an embodiment, the trained second neural network may be installed in the text recognition unit 430 and used to recognize a text from an input image.

In an embodiment, the text recognition unit 430 may receive coordinate values of each text from the text detection unit 420 and obtain an image of the text region as input data. For example, the text recognition unit 430 may crop an image to leave only a region identified based on coordinate values (x, y, w, h) and use the cropped image as input data of the second neural network.

In an embodiment, the second neural network may receive an image of a text region as input data, analyze the input data to extract features, perform computations to classify the extracted features, and thus output a recognized text as resulting data corresponding to the input data.

In an embodiment, the text recognition unit 430 may transmit, to the text matching unit 440, the recognized text obtained through the second neural network and confidence values each representing the accuracy of the label of each character of the recognized text.

In an embodiment, the text matching unit 440 may receive, from the text recognition unit 430, the recognized text and the confidence values of the respective characters. In an embodiment, the text matching unit 440 may obtain valid data from the recognized text. In an embodiment, the text matching unit 440 may obtain at least one of first valid data or second valid data by processing the recognized text.

In an embodiment, the text matching unit 440 may obtain a title list from a database 450. In an embodiment, the title list stored in the database 450 may be received from the server 150 providing additional information, or may be received from a server separate from the server 150 providing additional information. In an embodiment, the manufacturer of the electronic device 100 may store the title list in the database 450 in advance when manufacturing the electronic device 100.

In an embodiment, when the title list is updated, the electronic device 100 may receive a new version of the updated title list and store it in the database 450 periodically or at random time intervals.

The database 450 may be included in the memory 103 of the electronic device 100 or may be included in the electronic device 100 separately from the memory 103.

In an embodiment, the title list may include a plurality of titles. In an embodiment, the title list may be a list including titles of content belonging to a certain content type. For example, a title list of a content type of 'game' may include a list of titles of games. In addition, a title list of a content type of 'movie' may include a list of titles of movies.

In an embodiment, the text matching unit 440 may obtain the title list from the database 450 and obtain comparison data for each title included in the title list. In an embodiment, the text matching unit 440 may obtain at least one of first comparison data or second comparison data for each title by processing the title.

In an embodiment, the text matching unit 440 may compare the comparison data with the valid data to identify, from among the obtained comparison data, comparison data that matches the valid data. In an embodiment, the text matching unit 440 may compare the first valid data with the first comparison data to obtain first matching information indicating a matching degree between the first valid data and the first comparison data. In an embodiment, the text matching unit 440 may compare the second valid data with the second comparison data to obtain second matching information indicating a matching degree between the second valid data and the second comparison data.

In an embodiment, the text matching unit 440 may identify comparison data that matches the valid data, based on at least one of the first matching information or the second matching information.

In an embodiment, the text matching unit 440 may sum up scores of the first matching information and the second matching information to identify the comparison data having the highest matching score, as comparison data that matches the valid data.

In an embodiment, the text matching unit 440 may output the identified comparison data or a title corresponding to the identified comparison data as an output (OUT) signal.

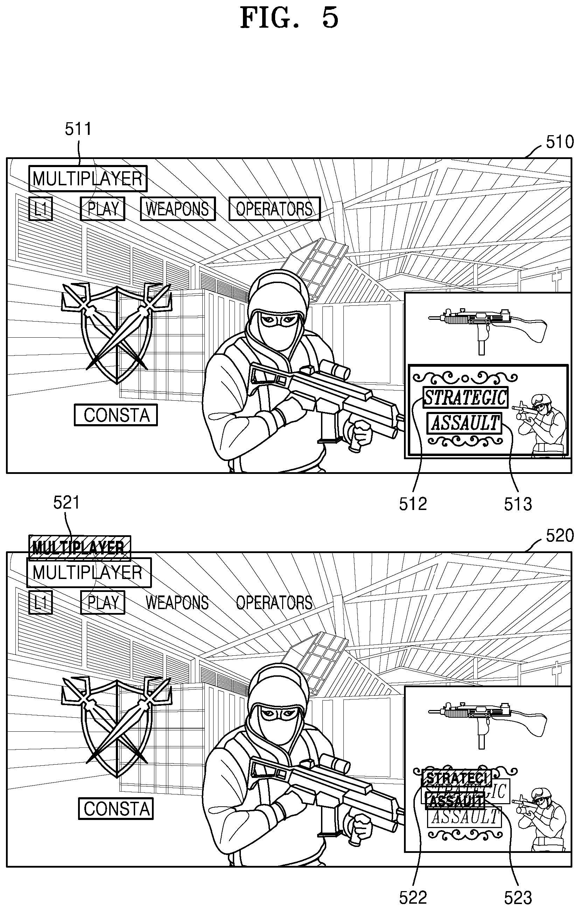

FIG. 5 is a diagram of the electronic device 100 recognizing a text in a captured image, according to an embodiment.

Referring to FIG. 5, the electronic device 100 may obtain a captured screen by capturing a currently output screen.

Content output by the electronic device 100 may include a text indicating the title of the content. For example, a text indicating the title of the content may be included in a screen in which the content starts or ends.

The content may include various texts in addition to the title.

For example, in a case in which the content is game content, the content may include texts containing various pieces of information such as information indicating the name, role, ability, and the like of an avatar or character controlled by the user, information about an item currently being used or available in the displayed content, or information about other avatars or characters appearing in the game. In addition, the content may include texts containing various game terms such as 'game start', 'game play', or 'stop'.

For example, in a case in which the content is movie content, the content may include texts indicating an actor appearing in the movie or a director of the movie, the year of production, or other descriptions of the movie.

510 of FIG. 5 illustrates a screen captured by the image obtaining unit 410 while the electronic device 100 outputs game content. It may be seen from FIG. 5 that various texts are included in the captured screen.

In an embodiment, the text detection unit 420 included in the electronic device 100 may detect a text region in the captured screen. In an embodiment, the text detection unit 420 may identify a text region in the captured screen by using the first neural network.

In an embodiment, the first neural network may be an algorithm for extracting features from a captured screen and detecting coordinate information based on the features, a set of such algorithms, or software and/or hardware for executing the set of algorithms. In an embodiment, the first neural network may obtain coordinate values of a bounding box representing the text region, as result values.

510 of FIG. 5 illustrates that a text identified by the text detection unit 420 is indicated by a bounding box.

In an embodiment, the text recognition unit 430 may obtain coordinate values of a text region from the text detection unit 420. In an embodiment, the text recognition unit 430 may obtain a text region image from the captured screen by using the coordinate values of the bounding box. The text region image may be an image obtained by cropping the captured screen to leave only the bounding box indicating the text region.

In an embodiment, the text recognition unit 430 may be an algorithm for extracting features from a text region image and recognizing a text by analyzing and classifying the features by using the second neural network, a set of such algorithms, or software and/or hardware for executing the set of algorithms. In an embodiment, the second neural network may obtain the recognized text as a result value.

Information indicating the title of content, such as a game title or a movie title, is often in a form in which characters are variously modified in shape or font rather than being block characters. For example, in some cases, the text recognition unit 430 cannot accurately recognize a text including cursives. In addition, in some cases, the text indicating the title is misrecognized due to the thickness, size, or color of the characters included in the title, the background color of a screen in which the title is located, objects in the background, figures around the title, etc.

In addition, in a case in which the number of characters recognized by the text recognition unit 430 is large, for example, is greater than a preset number N, the text recognition unit 430 may not accurately recognize the entire text according to the performance of the text recognition unit 430.

520 of FIG. 5 illustrates that a text recognized by the text recognition unit 430 is indicated on a text region.

Comparing 510 with 520 of FIG. 5, it may be seen that the text recognition unit 430 accurately recognizes a text 'MULTIPLAYER' 511 included in 510, e.g., the captured screen, as text 'MULTIPLAYER' 521. However, it may be seen that the text recognition unit 430 misrecognizes characters in a text 'STRATEGIC' 512 and a text 'ASSAULT' 513 among the texts included in the captured screen, as text 'STRATECI' 522 and text 'ASSAUIT' 523, respectively. This means that the text recognition unit 430 accurately recognizes texts that are not modified in shape, such as text 'MULTIPLAYER' 511, but inaccurately recognizes texts that are modified to be in other fonts, such as text 'STRATEGIC' 512 and text 'ASSAULT' 513.

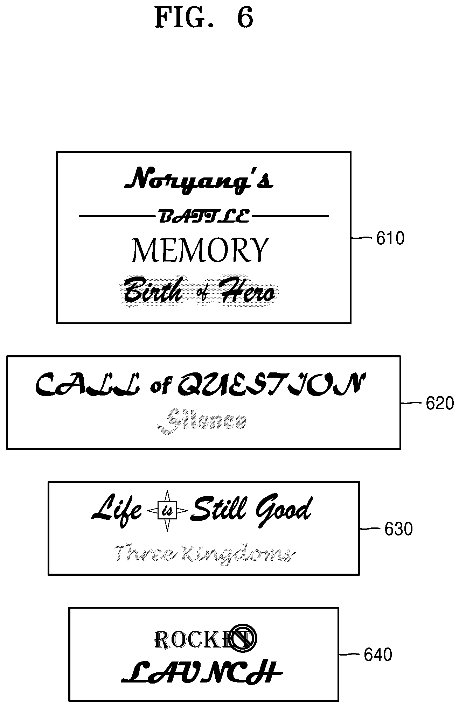

FIG. 6 is a diagram of titles in various styles included in images, according to an embodiment.

A game title may be modified in character shape into various forms other than normal characters. For example, a game title may have various forms, such as a case in which some of the characters are expressed as figures, a case in which the characters differ from each other in size, or a case in which some characters are cursives and the other characters are block characters. In addition, the game title may have a form in which the characters are slant, overlap each other, or overlap a line, a figure, a background, or the like. In addition, the text may include numeric characters or special characters in addition to characters.

FIG. 6 illustrates images each showing a game title included in a game screen in a case in which the type of content is game.

The image in 610 includes characters 'Noryang's'. Here, it may be seen that an apostrophe, which is a special character, is between 'g' and 's'. In addition, it may be seen that 'of' in characters 'Birth of Hero' included in the title in 610 is smaller than other characters.

It may be seen that characters 'OF' in the image in 620 is smaller than other characters. In addition, it may be seen that, while characters 'Call of Question' are clear, characters 'Silence' below them are blurry.

It may be seen that characters 'is' in the image in 630 are smaller than other characters and overlaid on a figure. In addition, it may be seen that characters 'Three Kingdoms' are not clear due to their thickness, size, or color.

It may be seen that 'ET' at the end of characters 'ROCKET' in the image in 640 is not accurately identified due to the background screen. In this case, the characters 'ROCKET' may be identified as 'ROCKE9' or 'ROCKEq'.

As such, the electronic device 100 may not accurately recognize a text included in a text region image due to the background or surrounding figures, or in a case in which the characters are expressed as figures, in a case in which the characters are significantly modified in style of font, or in a case in which the characters are blurry. When the text is not accurately recognized, it is also difficult to accurately identify the title.

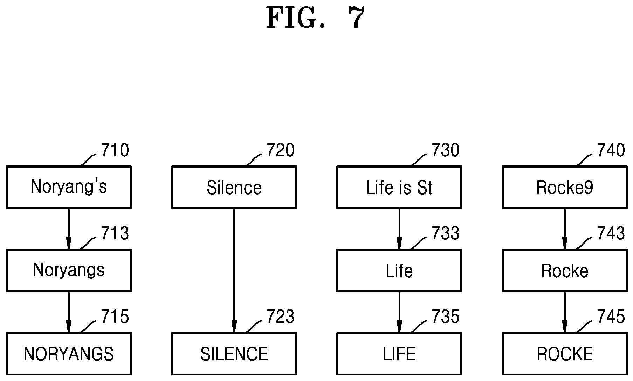

FIG. 7 is a diagram of the electronic device 100 obtaining first valid data, according to an embodiment.

In an embodiment, the electronic device 100 may identify a text region in a captured screen and recognize a text in the identified text region. In an embodiment, the electronic device 100 may obtain a text recognition result and preprocess the recognized text.

In an embodiment, the electronic device 100 may obtain valid data by preprocessing the recognized text. The valid data may refer to information obtained by preprocessing a text in order for the electronic device 100 to match the recognized text with a content list.

In an embodiment, preprocessing the text by the electronic device 100 may mean preprocessing the recognized text according to a predefined criterion before comparing the text with a title. In an embodiment, the electronic device 100 may obtain valid data by removing unnecessary information from the recognized text and processing the recognized text into a form that facilitates the matching.

In an embodiment, the electronic device 100 may obtain a plurality of pieces of valid data from the same text. The plurality of pieces of valid data may include first valid data and second valid data.

In an embodiment, the electronic device 100 may preprocess data to obtain the first valid data. In an embodiment, the first valid data may be valid data used to perform word-based matching with first comparison data.

In a case in which the recognized text includes special characters or numeric characters, it is difficult for the electronic device 100 to accurately recognize the special characters or numeric characters. Because obtaining a more accurate result in text matching is more important than the meaning of special characters or numeric characters, in an embodiment, when the recognized text includes special characters or numeric characters, the electronic device 100 may remove special characters or numeric characters from the text.

In an embodiment, the electronic device 100 may substitute some characters included in the recognized text with one character. For example, in a case in which the characters included in the recognized text are in a language with upper and lower case letters, such as English (Latin), Greek, Armenian, or Cyrillic (Russian), the electronic device 100 may convert the characters to upper case or lower case.

In an embodiment, in a case in which the recognized text includes spaces, the electronic device 100 may split the recognized text into words by using the spaces as separators.

In addition, in an embodiment, the electronic device 100 may remove words with N or fewer characters. For example, a word with a small number of characters, such as 'of', 'is', or 'the', is likely to be a significantly commonly used term. Accordingly, in an embodiment, the electronic device 100 may remove words with a small number of characters from the recognized text. For example, when N is 2, the electronic device 100 may remove words with two or fewer characters from the text.

In an embodiment, the processing sequence in which the electronic device 100 processes the recognized text to obtain the first valid data may be variously modified.

For example, the electronic device 100 may obtain first valid data including one or more words by sequentially performing removing special characters and numeric characters included in the recognized text, converting the characters to upper case, splitting the recognized text into words by using spaces as separators, and removing words with N or fewer characters.

In an embodiment, the electronic device 100 may obtain first valid data by converting the characters included in the recognized text to upper case, then removing special characters and numeric characters from the recognized text, then splitting the recognized text into words by using spaces as separators, and removing words with N or fewer characters from the words.

In an embodiment, the electronic device 100 may split the recognized text into words by using spaces as separators, then convert the characters included in the words to upper case, and then remove special characters or numeric characters included in the text.

Hereinafter, obtaining, by the electronic device 100, first valid data from a recognized text will be described with reference to FIG. 7.

The electronic device 100 may recognize text 'Noryang's' 710 of FIG. 7 as a text in the image in 610 of FIG. 6. In an embodiment, the electronic device 100 may obtain text 'Noryangs' 713 by removing the apostrophe, which is a special character, from text 'Noryang's' 710. In an embodiment, the electronic device 100 may obtain text 'NORYANGS' 715 as first valid data by converting all characters included in text 'Noryangs' 713 to upper case.

Similarly, in a case in which the electronic device 100 recognizes text 'Silence' 720 as a text from the image in 620 of FIG. 6, the electronic device 100 may obtain text 'SILENCE' 723 by converting all characters included in text 'Silence' 720 to upper case, and use it as first valid data.

Similarly, in a case in which the electronic device 100 recognizes a text 'Life is Still Good' from the image in 630 of FIG. 6, the electronic device 100 may identify spaces between a plurality of words included in the text and split the text into words by using the spaces as separators. That is, the electronic device 100 may split the text 'Life is Still Good' into 'Life', 'is', 'Still', and 'Good', by using the spaces as separators. In an embodiment, the electronic device 100 may remove the two-character word 'is' from among the obtained words 'Life', 'is', 'Still', and 'Good', and thus obtain only the remaining words 'Life', 'Still', and 'Good'. Then, the electronic device 100 may obtain 'LIFE', 'STILL', and 'GOOD' as first valid data by converting all of the characters to upper case.

In an embodiment, the electronic device 100 may recognize only M characters when performing text recognition. When the text is too long, the electronic device 100 may be unable to recognize all of the long text depending on the text recognition performance. Accordingly, in an embodiment, the electronic device 100 may recognize only M characters among characters included in an image. In addition, in an embodiment, the electronic device 100 may recognize only M characters per line.

For example, when M is 10, the electronic device 100 may recognize only a text 'Life is St' 730, which is composed of 10 characters and spaces, from the text of the uppermost line among the texts included in the image in 630 of FIG. 6, that is, the text 'Life is Still Good'. In an embodiment, the electronic device 100 may split the recognized text 'Life is St' 730 into words 'Life', 'is', and 'St' by using the spaces included in the text as separators, and remove 'is' and 'St', which have two or fewer characters, from among them. The electronic device 100 may obtain, as first valid data, text 'LIFE' 735 obtained by converting all characters included in the remaining word 'Life' 733 to upper case.

In a similar way, for example, in a case in which the electronic device 100 misrecognizes 't' as a numeric character '9' from the image in 640 of FIG. 6 and thus recognizes the text as text 'Rocke9' 740, in an embodiment, the electronic device 100 may obtain text 'Rocke' 743 by removing the numeric character '9' from text 'Rocke9' 740. In an embodiment, the electronic device 100 may obtain text 'ROCKE' 745 as first valid data by converting all characters included in text 'Rocke' 743 to upper case.

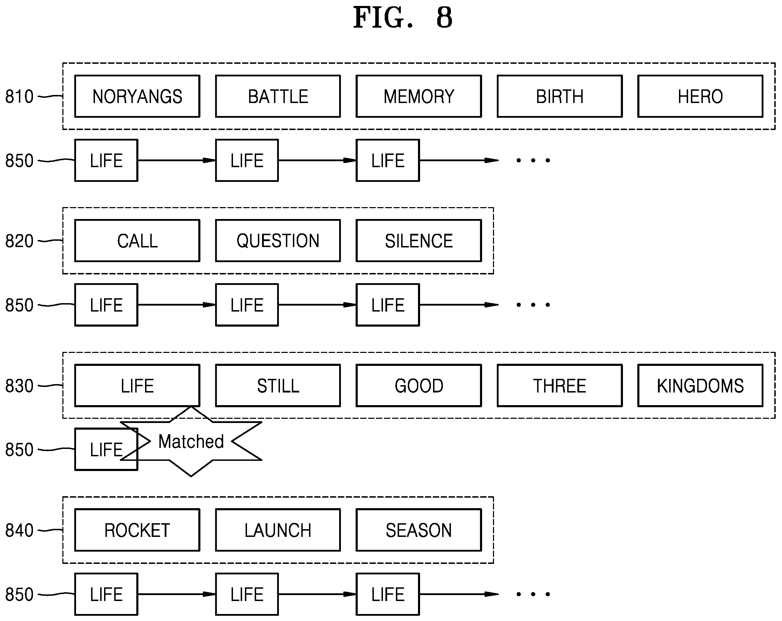

FIG. 8 is a diagram of the electronic device 100 obtaining first comparison data and comparing the first comparison data with first valid data, according to an embodiment.

In an embodiment, the electronic device 100 may obtain a content list from the memory 103 or the database 450. The content list may include a title list. The title list may be data including titles of content in the form of a list.

In an embodiment, each title included in the title list may include a single word or a plurality of words separated by spaces.

In an embodiment, the electronic device 100 may obtain comparison data by preprocessing each of the plurality of titles included in the title list. In an embodiment, the electronic device 100 may obtain the comparison data by removing unnecessary information or information that makes matching difficult from the title and processing characters included in the title into a form that facilitates the matching. In an embodiment, the comparison data may refer to information obtained by processing the title such that the electronic device 100 matches the title with valid data.

In an embodiment, the electronic device 100 may obtain the comparison data satisfying a predefined condition by processing the title. In an embodiment, the electronic device 100 may process data such that the comparison data obtained from the title and valid data obtained from a recognized text satisfy the same condition or criterion.

In an embodiment, the electronic device 100 may identify comparison data that matches the valid data by comparing the comparison data with the valid data satisfying the same criterion.

In an embodiment, the comparison data may include at least one of first comparison data or second comparison data.

In an embodiment, the electronic device 100 may preprocess data to obtain the first comparison data. In an embodiment, the first comparison data may be comparison data used to perform word-based matching with first valid data.

In an embodiment, in a case in which the title includes special characters or numeric characters, the electronic device 100 may remove the special characters or numeric characters included in the title. Numeric characters and special characters are likely to be misrecognized, and thus may cause an error in data matching. Accordingly, the electronic device 100 may remove data that makes matching difficult, by removing the special characters and numeric characters included in the title.

In an embodiment, in a case in which the title includes a language with upper and lower case letters, the electronic device 100 may convert characters included in the title to upper or lower case. For example, the electronic device 100 may convert all characters included in the title to upper case.

In an embodiment, the electronic device 100 may remove words with N or fewer characters from among words included in the title. For example, when N is 2, the electronic device 100 may remove words with two or fewer characters from the title.

Each title included in the title list may include spaces. In this case, the electronic device 100 does not need to consider the spaces when obtaining the comparison data from the title.

Hereinafter, the electronic device 100 obtaining first comparison data from a title will be described with reference to FIG. 8.

In FIG. 8, the text 810 illustrates first comparison data obtained by the electronic device 100 preprocessing 'Noryang's Battle ^{®} Memory: Birth of Hero', which is a game title corresponding to the image in 610 of FIG. 6.

In an embodiment, the electronic device 100 may remove special characters ''', '^{®}', and ':' from the title. In an embodiment, the electronic device 100 may convert all characters included in the title to upper case. In addition, in an embodiment, the electronic device 100 may remove words with N or fewer characters from among a plurality of words included in the title. For example, when N is 3, the electronic device 100 may remove 'of', which is a word with three or fewer characters, from among the words included in the title.

In an embodiment, the electronic device 100 may obtain the first comparison data including a total of five words 'NORYANGS', 'BATTLE', 'MEMORY', 'BIRTH', and 'HERO' in order, by processing the title.

In FIG. 8, the text 820 illustrates first comparison data obtained by the electronic device 100 preprocessing 'Call of Question ^{®}: Silence', which is a game title corresponding to the image in 620 of FIG. 6.

In an embodiment, the electronic device 100 may remove special characters '^{®}' and ':' from the title. In an embodiment, the electronic device 100 may convert all characters included in the title to upper case. In an embodiment, the electronic device 100 may obtain the first comparison data including three words 'CALL', 'QUESTION', and 'SILENCE' in order, by removing 'of', which is a word with N or fewer characters, from among a plurality of words included in the title.

In FIG. 8, the text 830 illustrates first comparison data obtained by the electronic device 100 preprocessing 'Life is Still Good ^{®}: Three Kingdoms', which is a game title corresponding to the image in 630 of FIG. 6.

In an embodiment, the electronic device 100 may remove special characters '^{®}' and ':' from the title. In an embodiment, the electronic device 100 may convert all characters included in the title to upper case. In an embodiment, the electronic device 100 may remove words with a small number of characters from among a plurality of words included in the title. For example, when N is 3, the electronic device 100 may obtain the first comparison data including five words 'LIFE', 'STILL', 'GOOD', 'THREE', and 'KINGDOMS' in order, by removing 'is', which is a word of three or fewer characters, from among the words.

In FIG. 8, the text 840 illustrates first comparison data obtained by the electronic device 100 preprocessing 'Rocket Launch ^{®} Season 8', which is a game title corresponding to the image in 640 of FIG. 6.

In an embodiment, the electronic device 100 may convert all characters included in the title to upper case. In an embodiment, the electronic device 100 may remove a special character '^{®}' from the title. In an embodiment, the electronic device 100 may obtain the first comparison data including three words 'ROCKET', 'LAUNCH', and 'SEASON' in order, by removing a numeric character '8' from the title.

In an embodiment, the electronic device 100 may compare the first comparison data generated for each title with the first valid data to determine whether they match each other.

In an embodiment, the electronic device 100 may obtain first matching information indicating a matching degree between the first valid data and the first comparison data. The first matching information may refer to a count of the number of times the first valid data and the first comparison data match each other.

In an embodiment, the electronic device 100 may identify the first comparison data having the highest score by assigning a score to the first comparison data that matches the first valid data and not assigning a score to the first comparison data that does not match the first valid data. In addition, the electronic device 100 may identify a title corresponding to the identified first comparison data.

For example, in FIG. 8, when the first valid data is text 'LIFE' 850, the electronic device 100 may compare text 'LIFE' 850 with the first comparison data generated for each title, in word units. The electronic device 100 may compare each word of the first valid data with each word of the first comparison data one by one to determine whether they match each other.

In an embodiment, when text 'LIFE' 850 matches one of the words included in the first comparison data 830, the electronic device 100 may assign a matching score of 1 to the first comparison data 830.

In an embodiment, the first valid data may include a plurality of words. For example, in a case in which the number of characters that may be recognized by the electronic device 100 performing text recognition is M = 14, the electronic device 100 may obtain first valid data including two words 'LIFE' and 'STILL', from the first fourteen (14) characters including spaces in the recognized text 'Life is Still Good'.

In this case, as illustrated in FIG. 8, the electronic device 100 may compare text 'LIFE' 850 with each first comparison data, and then compare 'STILL', which is another word included in the first valid data, with each first comparison data.

In an embodiment, the electronic device 100 may assign a score to the first comparison data that matches the word 'STILL' of the first valid data. That is, the electronic device 100 may identify that 'STILL' matches one of the words included in the first comparison data 830 and further assign a matching score of 1 to the first comparison data 830.

In an embodiment, the electronic device 100 may identify the comparison data having the highest matching score, and identify a title corresponding to the identified comparison data. For example, in the above example, the electronic device 100 may identify that the first comparison data 830 has the highest matching score, and identify a title corresponding to the identified comparison data, e.g., 'Life is Still Good^{®}: Three Kingdoms'.

As such, in an embodiment, the electronic device 100 may obtain the first valid data from the recognized text and obtain the first comparison data from the title. The electronic device 100 may compare the first valid data with the first comparison data to identify the first comparison data that matches the first valid data.

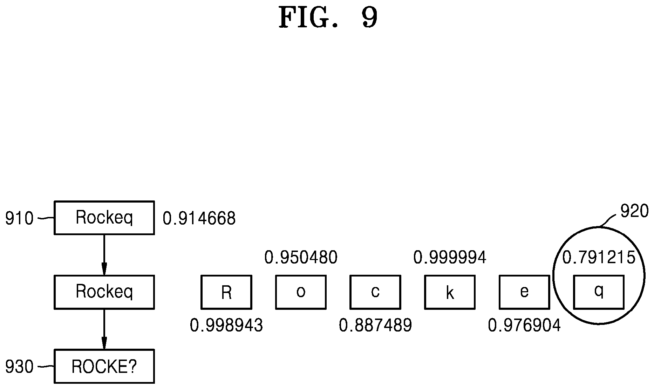

FIG. 9 is a diagram of the electronic device 100 obtaining first valid data by considering confidence values, according to an embodiment.

In an embodiment, when obtaining first valid data from a recognized text, the electronic device 100 may consider a confidence value of each character included in the recognized text. In an embodiment, confidence represents the reliability of a recognized character, and may refer to a reliability score of the character or a probability that the recognized character is correct.

In an embodiment, the text recognition unit 430 included in the electronic device 100 may estimate a character label by using the second neural network. In an embodiment, the second neural network may estimate a label of a first character based on the attention to the input feature, and use the estimated label as an input again to estimate the next character. That is, when recognizing a character included in a text, the second neural network may obtain probabilities of the character being A to Z, respectively. The second neural network may recognize the character as a character having the highest probability, and transmit the recognized character and the probability value of the character, that is, a confidence value, to the text matching unit 440.

In an embodiment, the text matching unit 440 may receive, from the text recognition unit 430, a character included in the recognized text and a confidence value of the character, that is, a probability value.

In an embodiment, the text matching unit 440 may obtain a confidence value indicating whether each character of a word included in the recognized text is accurate, and compare the first valid data with the first comparison data, by considering a character having a confidence value less than a reference value as matching all characters. That is, the text matching unit 440 may marks, with as a mask, a character with the lowest confidence value or one or more characters with a confidence value less than the reference value among the characters of the word included in the recognized text, and regard the character(s) as data that has already been matched.

Hereinafter, the text matching unit 440 obtaining first valid data by considering confidence values will be described with reference to FIG. 9.

In an embodiment, the text matching unit 440 may receive a recognized text from the text recognition unit 430. For example, as illustrated in FIG. 9, the text matching unit 440 may receive, from the text recognition unit 430 , a word 'Rockeq' 910 and a confidence value for each character included in the word.

FIG. 9 illustrates that the confidence value of the first character 'R' of the word is 0.998943. This may mean that the probability that the first character is 'R' is 0.998943. In FIG. 9, the confidence value of the second character 'o' of the word is 0.95048, which may mean that the probability that the second character is 'o' is 0.95048.

In an embodiment, the text matching unit 440 may identify a character having the lowest confidence value from among characters included in a word. For example, in FIG. 9, the text matching unit 440 may identify that the last character 'q' 920 of the word has the lowest confidence value.

In an embodiment, the text matching unit 440 may identify a character having a confidence value less than or equal to a reference value from among confidence values for the characters included in a word. For example, in FIG. 9, when the reference value is 0.8, the text matching unit 440 may identify the character 'q' 920 having a confidence value of 0.8 or less.

In an embodiment, as described above with reference to FIG. 8, the text matching unit 440 may obtain first valid data by converting the characters included in the recognized text to upper case.

In addition, in an embodiment, when obtaining the first valid data from the characters included in the recognized text, the text matching unit 440 may obtain 'ROCKE?' 930 as the first valid data by substituting the character 'q' 920 having a low confidence value with a particular symbol, for example, '?'.

In an embodiment, the text matching unit 440 may compare the first valid data with first comparison data to obtain first matching information indicating a matching degree between the first valid data and the first comparison data. In an embodiment, when the text matching unit 440 compares the first valid data with the first comparison data, and the character of the first valid data to be compared is the particular symbol, for example, '?', the text matching unit 440 may consider the character as having been matched and perform matching on the next character.

In an embodiment, the text matching unit 440 may obtain a confidence value for each character of the word included in the first valid data only when the average of the confidence values of the characters of the word is greater than or equal to a reference average value.

That the average confidence value of a word is greater than the reference average value may mean that the word is highly likely to have been accurately recognized, e.g., the word is highly reliable. In an embodiment, the text matching unit 440 may obtain a confidence value for each character of only words with high reliability, and match only characters having a confidence value greater than the reference value with the comparison data. That is, when the overall reliability of a word is high and only one character or a small number of characters of the word are incorrect, the text matching unit 440 may include the word in the first valid data rather than omitting the word so as to use the word for matching with the comparison data.

To this end, in an embodiment, the text matching unit 440 may receive, from the text recognition unit 430, a word and a confidence value for each character included in the word, then sum up the confidence values of the respective characters included in the word, and divide the sum by the number of the characters to obtain the average confidence value of the entire word. For example, the text matching unit 440 may sum up the confidence values for the respective characters of the word 'Rockeq' 910 received from the text recognition unit 430, and divide the sum by the number of the characters to obtain the average confidence value of the word, which is 0.914688.

In an embodiment, the text matching unit 440 may determine whether the average confidence value of the word is greater than the reference average value, for example, 0.9, and only when the average confidence value is greater than the average confidence value, the text matching unit 440 may determine whether the confidence value of each character included in the word has low reliability.

On the contrary, that the average confidence value of a word is less than the reference average value may mean that the word is not accurately recognized and has low reliability. A matching result obtained by comparing a word with low reliability with comparison data also has low reliability. To prevent this, in an embodiment, when the average confidence value of a word is less than the reference average value, the text matching unit 440 may not include the word in the first valid data, such that a word with low reliability is not used for matching with the first comparison data.

As such, in an embodiment, when generating the first valid data, the text matching unit 440 may substitute a character having a low confidence value among the characters included in the first valid data with a particular symbol, by considering the confidence value of each character. In addition, when comparing the first valid data with the first comparison data, the text matching unit 440 may perform text matching, by considering the character corresponding to the particular symbol included in the first valid data as matching the first comparison data. Accordingly, even a word with only one misrecognized character may be matched with an appropriate word in comparison data, and thus, comparison data that matches the valid data may be more accurately identified.

In addition, by considering the average confidence value of the entire word, the text matching unit 440 may obtain the confidence value for each character of the word only when the average confidence value of the word is greater than or equal to the reference value, such that a word that has high reliability but includes some incorrect characters is used as valid data for matching.

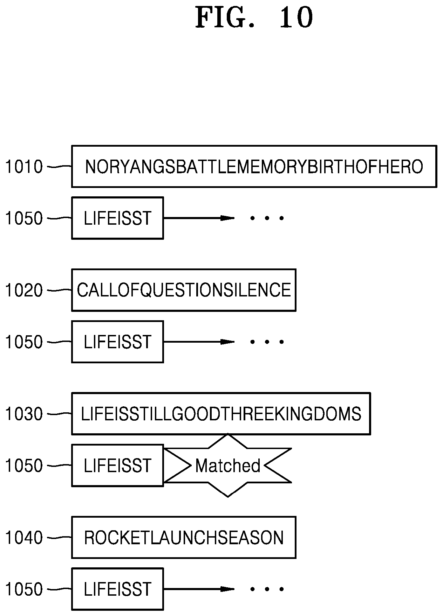

FIG. 10 is a diagram of the electronic device 100 obtaining second valid data and second comparison data and matching the second valid data with the second comparison data, according to an embodiment.

In an embodiment, the electronic device 100 may obtain, from a recognized text, second valid data that is different from first valid data by preprocessing the recognized text.

In an embodiment, the second valid data may be valid data used when matching characters arranged in a row with second comparison data in their entireties.

In an embodiment, in a case in which special characters or numeric characters are included in the recognized text, the electronic device 100 may remove them from the recognized text.

In an embodiment, in a case in which the recognized text is in a language with upper and lower case letters, the electronic device 100 may convert the characters included in the recognized text to upper case or lower case.

In an embodiment, in a case in which the recognized text includes spaces, the electronic device 100 may remove the spaces included in the recognized text to concatenate all words or characters in a row, unlike when obtaining first valid data. In an embodiment, the electronic device 100 may obtain second valid data in which characters are arranged in a row, by concatenating all characters without removing characters regardless of the number of characters.

In an embodiment, the sequence in which the electronic device 100 processes the recognized text to obtain the second valid data may be variously modified. For example, the electronic device 100 may obtain second valid data by sequentially performing removing special characters and numeric characters included in the recognized text, converting the characters to upper case, and removing spaces to arrange one or more words in a row.

In an embodiment, the electronic device 100 may obtain second valid data by removing spaces included in the recognized text to concatenate the characters, converting all characters to upper case, and then removing special characters and numeric characters.

In an embodiment, the electronic device 100 may recognize only M characters when performing text recognition. Depending on the text recognition performance of the electronic device 100, the electronic device 100 may be unable to recognize a certain number or more of characters. Accordingly, in an embodiment, the electronic device 100 may recognize only M characters among characters included in an image.

FIG. 10 illustrates an example in which the electronic device 100 obtains text 'LIFEISST' 1050 as second valid data from a text 'Life is Still Good' recognized from an image.

In an embodiment, the electronic device 100 may recognize only M characters in the text 'Life is Still Good' included in the image. For example, When M is 10, the electronic device 100 may recognize only 10 characters including spaces, e.g., 'Life is St', in the image.

In an embodiment, the electronic device 100 may obtain the second valid data, e.g., text 'LIFEISST' 1050, by removing spaces included in the recognized text and converting all lower case characters to upper case to arrange the characters in a row.

In an embodiment, the electronic device 100 may obtain second comparison data for each title included in a title list. The electronic device 100 may obtain, from the title, the second comparison data that is different from first comparison data by preprocessing the title.

In an embodiment, unlike the first comparison data, the second comparison data may be data in which the characters are arranged in a row without spaces.

In an embodiment, the electronic device 100 may obtain the second comparison data satisfying a predefined condition by processing the title. In an embodiment, the electronic device 100 may process data such that the second comparison data obtained from the title and the second valid data obtained from the recognized text satisfy the same condition or criterion.

In an embodiment, the electronic device 100 may remove data that makes matching difficult, by removing special characters and numeric characters included in the title.

In an embodiment, in a case in which the title includes a language with upper and lower case letters, the electronic device 100 may convert characters included in the title to, for example, upper case.

When each title included in the title list includes two or more words, the title may include one or more spaces. In an embodiment, the electronic device 100 may concatenate the words by removing the spaces therebetween.

In an embodiment, the electronic device 100 may obtain the second comparison data by concatenating all words regardless of the characters of the words included in the title.

In FIG. 10, the text 1010 illustrates second comparison data obtained by the electronic device 100 preprocessing a title 'Noryang's Battle ^{®} Memory: Birth of Hero'. In an embodiment, the electronic device 100 may remove special characters ''', '^{®}', and ':' from the title and convert all characters included in the title to upper case. In addition, in an embodiment, the electronic device 100 may obtain the second comparison data in which characters are concatenated in a row, e.g., 'NORYANGSBATTLEMEMORYBIRTHOFHERO', by removing spaces between a plurality of words included in the title to concatenate all characters.

In FIG. 10, the text 1020 illustrates second comparison data obtained by the electronic device 100 preprocessing a title 'Call of Question ^{®}: Silence'. In an embodiment, the electronic device 100 may remove special characters '^{®}' and ':' from the title and convert all characters included in the title to upper case. In addition, in an embodiment, the electronic device 100 may obtain the second comparison data in which characters are arranged in a row, e.g., 'CALLOFQUESTIONSILENCE', by removing spaces between a plurality of words included in the title to concatenate all characters.

In FIG. 10, the text 1030 illustrates second comparison data obtained by the electronic device 100 preprocessing a title 'Life is Still Good^{®}: Three Kingdoms'. In an embodiment, the electronic device 100 may remove special characters '^{®}' and ':' from the title. In an embodiment, the electronic device 100 may convert all characters included in the title to upper case. In an embodiment, the electronic device 100 may obtain the second comparison data in which characters are arranged in a row, e.g., 'LIFEISSTILLGOODTHREEKINGDOMS', by removing spaces between a plurality of words included in the title to concatenate all words in order.

In FIG. 10, the text 1040 illustrates second comparison data obtained by the electronic device 100 preprocessing a title 'Rocket Launch ^{®} Season 8'. In an embodiment, the electronic device 100 may convert all characters included in the title to upper case and remove a special character '^{®}' and a numeric character '8' included in the title. In an embodiment, the electronic device 100 may obtain the second comparison data in which characters are arranged in order, e.g., 'ROCKETLAUNCHSEASON', by removing spaces between words included in the title.

In an embodiment, the electronic device 100 may compare the second valid data of text 'LIFEISST' 1050 with pieces of second comparison data respectively generated for a plurality of titles. In an embodiment, the electronic device 100 may compare the second valid data with each piece of second comparison data in which characters are arranged in a row, in their entireties.

In an embodiment, the electronic device 100 may obtain second matching information indicating a matching degree between the second valid data and the second comparison data. The second matching information is a count of the number of times the second valid data matches the second comparison data, and may refer to a score assigned to the second comparison data that matches the second valid data.

In an embodiment, the electronic device 100 may compare the second valid data with each character included in the second comparison data one by one, and assign a score to the second comparison data when a preset number or more of characters are matched.

In an embodiment, when the preset number or more of characters, for example, four or more characters, of the second valid data of text 'LIFEISST' 1050 match the second comparison data 1030, the electronic device 100 may assign a matching score of 1 to the second comparison data.

In an embodiment, the electronic device 100 may identify the comparison data having the highest matching score, and identify a title corresponding to the identified comparison data. For example, in the above example, the electronic device 100 may identify that the second comparison data 1030 has the highest matching score, and identify a title corresponding to the identified comparison data, e.g., 'Life is Still Good^{®}: Three Kingdoms'.

As such, in an embodiment, the electronic device 100 may obtain second valid data and second comparison data having the same condition, by processing each of a recognized text and a title. As such, in some cases, a matching result obtained by processing all characters to be concatenated without spaces to generate second valid data and second comparison data and comparing the second valid data with the second comparison data may be better than a matching result obtained by extracting words, removing words with a certain number or less of characters from among the words, and then comparing the words with each other.

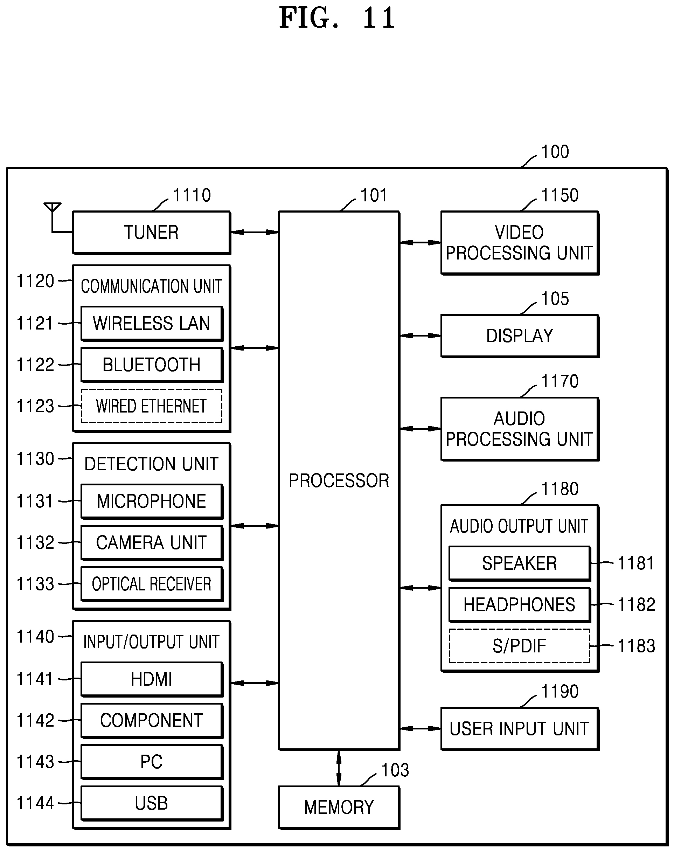

FIG. 11 is an internal block diagram of the electronic device 100 according to an embodiment.

The electronic device 100 of FIG. 11 may be an example of the electronic device 100 of FIG. 2.

Referring to FIG. 11, the electronic device 100 may include the processor 101, the memory 103, and the display 105. The processor 101, the memory 103, and the display 105 included in the electronic device 100 of FIG. 11 perform the same operations of the processor 101, the memory 103, and the display 105 included in the electronic device 100 of FIG. 2, respectively, and thus are illustrated with the same reference numerals. Hereinafter, descriptions that are provided above with reference to FIG. 2 will be omitted.

In an embodiment, the electronic device 100 may further include a tuner 1110, a communication unit 1120, a detection unit 1130, an input/output unit 1140, a video processing unit 1150, an audio processing unit 1170, an audio output unit 1180, and a user input unit 1190, in addition to the processor 101, the memory 103, and the display 105.

The tuner 1110 may be tuned to and select only a frequency of a channel desired to be received by the electronic device 100 from among a number of radio wave components by performing amplification, mixing, resonance, or the like on broadcast content or the like received in a wired or wireless manner. Content received through the tuner 1110 is decoded to be separated into an audio, a video, and/or additional information. The audio, video, and/or additional information may be stored in the memory 103 under control of the processor 101.

In an embodiment, the communication unit 1120 may connect the electronic device 100 to a peripheral device, an external device, a server, a mobile terminal, or the like, under control of the processor 101. The communication unit 1120 may include at least one communication module capable of performing wireless communication. The communication unit 1120 may include at least one of a WLAN module 1121, a Bluetooth module 1122, or a wired Ethernet module 1123, in accordance with the performance and structure of the electronic device 100.

The Bluetooth module 1122 may receive a Bluetooth signal transmitted from a peripheral device according to a Bluetooth communication standard. The Bluetooth module 1122 may be a Bluetooth Low Energy (BLE) communication module, and may receive a BLE signal. The Bluetooth module 1122 may continuously or temporarily perform BLE signal scanning to detect whether a BLE signal is received. The WLAN module 1121 may transmit and receive a Wi-Fi signal to and from a peripheral device according to a Wi-Fi communication standard.

The detection unit 1130 may detect a voice, an image, or an interaction of a user, and may include a microphone 1131, a camera unit 1132, and an optical receiver 1133. The microphone 1131 may receive an audio signal including a voice uttered by the user or noise, convert the received audio signal into an electrical signal, and output the electrical signal to the processor 101.

The camera unit 1132 may include a sensor and a lens , and may capture an image formed on a screen, and transmit the captured image to the processor 101.

In an embodiment, the camera unit 1132 may capture an image displayed on the screen in response to the electronic device 100 receiving and outputting content through the external device 110. In an embodiment, the camera unit 1132 may capture an image output through the screen, at preset periods or at particular time points.

The optical receiver 1133 may receive an optical signal (including a control signal). The optical receiver 1133 may receive an optical signal corresponding to a user input (e.g., a touch, a push, a touch gesture, a voice, or a motion) from a control device, such as a remote controller or a mobile phone.

The input/output unit 1140 may receive a video (e.g., a moving image signal or a still image signal), an audio (e.g., a voice signal or a music signal), and additional information from the external device 110 under control of the processor 101.

The input/output unit 1140 may include one of an HDMI port 1141, a component jack 1142, a PC port 1143, and a USB port 1144. The input/output unit 1140 may include a combination of the HDMI port 1141, the component jack 1142, the PC port 1143, and the USB port 1144.

In an embodiment, the input/output unit 1140 may be connected to the external device 110 by using the HDMI port 1141 to receive game content or content such as a movie or a drama, from the external device 110.

The video processing unit 1150 may process image data to be displayed by the display 105, and may perform various image processing operations, such as decoding, rendering, scaling, noise removing, frame rate conversion, and resolution conversion, on the image data.

The display 105 may display, on a screen, content received from a broadcasting station, an external server, or the external device 110 such as an external storage medium, or provided by various apps, for example, OTT service providers. The content is media signals in various forms such as games, movies, dramas, or entertainment programs, and may include video signals, images, texts, and the like.

The audio processing unit 1170 processes audio data. The audio processing unit 1170 may perform various processing operations, such as decoding, amplification, or noise removing, on the audio data.

The audio output unit 1180 may output an audio included in content received through the tuner 1110, an audio input through the communication unit 1120 or the input/output unit 1140, and an audio stored in the memory 103, under control of the processor 101. The audio output unit 1180 may include at least one of a speaker 1181, headphones 1182, or a Sony/Philips Digital Interface (S/PDIF) output port 1183.

The user input unit 1190 may receive a user input for controlling the electronic device 100. The user input unit 1190 may include, but is not limited to, various types of user input devices including a touch panel for detecting a touch of the user, a button for receiving a push manipulation of the user, a wheel for receiving a rotation manipulation of the user, a keyboard, a dome switch, a microphone for voice recognition, a motion sensor for sensing a motion, and the like. In an embodiment, when the electronic device 110 is controlled by a control device such as a remote controller, the user input unit 1190 may receive a control signal received from the control device.

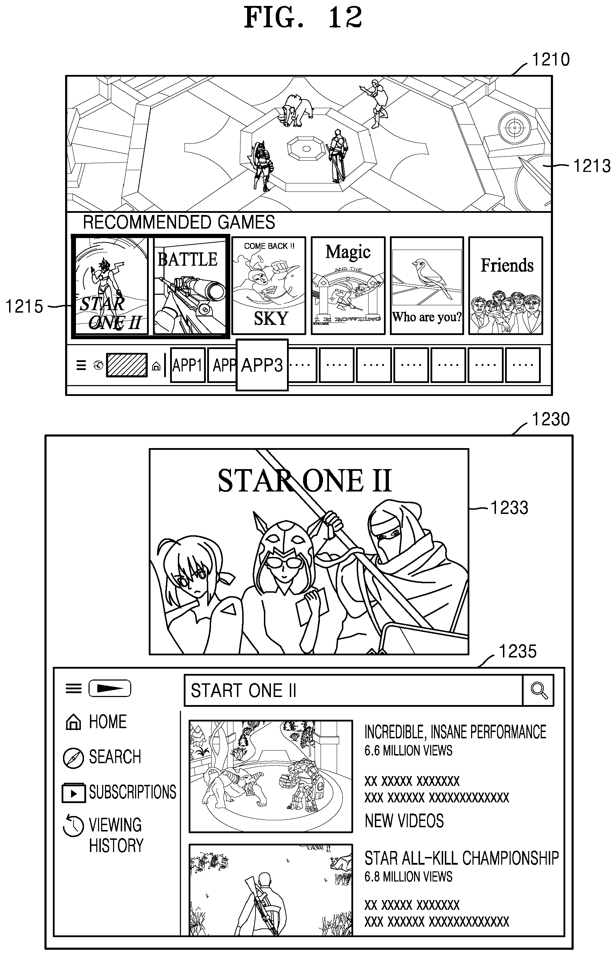

FIG. 12 is a diagram of the electronic device 100 providing additional information based on an identified title, according to an embodiment.

Referring to FIG. 12, the electronic device 100 may output a game content 1213. In an embodiment, the electronic device 100 may obtain a screen in which the title of the game content 1213 is output, when the game content 1213 starts, when the game ends, or at an arbitrary time point, by periodically capturing the screen. In an embodiment, the electronic device 100 may detect and recognize a text in the captured screen, and obtain valid data from the text. In an embodiment, the electronic device 100 may compare the valid data with comparison data for each title to identify comparison data that matches the valid data, and identify a title corresponding to the identified comparison data.

In an embodiment, the electronic device 100 may provide additional information based on the identified title.

In an embodiment, the electronic device 100 may transmit the identified title to the server 150.

In an embodiment, the server 150 may receive the title from the electronic device 100 and obtain additional information corresponding to the title.

In an embodiment, the additional information corresponding to the title may be, for example, information about recommended content. Based on the title received from the electronic device 100, the server 150 may determine preferences of users using or watching the title, and searches for other content that may be preferred by the users using or watching the title. For example, the server 150 may use a recommender system to recommend other content that is preferred or preferable by users who have used or watched the content, based on a viewing history or a consumption history of a plurality of users, such as ratings.

In an embodiment, the server 150 may transmit information about the recommended content to the electronic device 100. The information about the recommended content may include, for example, the title of the recommended content, an advertising image, an advertising video, and the like.

In an embodiment, the electronic device 100 may receive the information about the recommended content from the server 150 and output the information.

As illustrated in FIG. 12, in an embodiment, the electronic device 100 may output information 1215 about recommended content received from the server 150 together with the game content 1213 through a screen 1210. The electronic device 100 may divide the screen 1210 to output the game content 1213 on an upper portion of the screen 1210 and output the information 1215 about the recommended content on a lower portion of the screen 1210.

Accordingly, the user may conveniently access recommended content in a search result related to a game being currently used, without performing a separate operation.

In an embodiment, the additional information corresponding to the title may include, for example, search information obtained through a search using the title. The search information may include a description of the content or information about content usage by other users. In a case in which the content is game content, the user may want to know how other users, for example, famous professional gamers, play the game. In an embodiment, a user who is playing the game for the first time may want to know how other users play the game.

In a case in which the content is movie content, information obtained through a search using the title may include, for example, other information about the content or information about content reviews by other users. The other information about the content may include information such as an actor or director of the content, the year of production, or the number of viewers.

In an embodiment, based on the title received from the electronic device 100, the server 150 may search a particular website for the title and transmit a search result to the electronic device 100. For example, in a case in which the content is game content, the server 150 may search a website for the title of the game and transmit, to the electronic device 100, game usage information of other users obtained as a result of the search. In an embodiment, in a case in which the content is movie content, the server 150 may search a website for the title of the movie and transmit, to the electronic device 100, other information about the content or information about reviews by critics obtained as a result of the search.

In an embodiment, the electronic device 100 may receive information about recommended content from the server 150 and output the information.

As illustrated in FIG. 12, in an embodiment, the electronic device 100 may output search information 1235 received from the server 150 together with game content 1233 through a screen 1230. The electronic device 100 may divide the screen 1230 to output the game content 1233 on an upper portion of the screen 1230 and output the search information 1235 on a lower portion of the screen 1230.

Accordingly, the user may conveniently access various search results related to the game being currently used, without directly searching a website for the content being currently used.

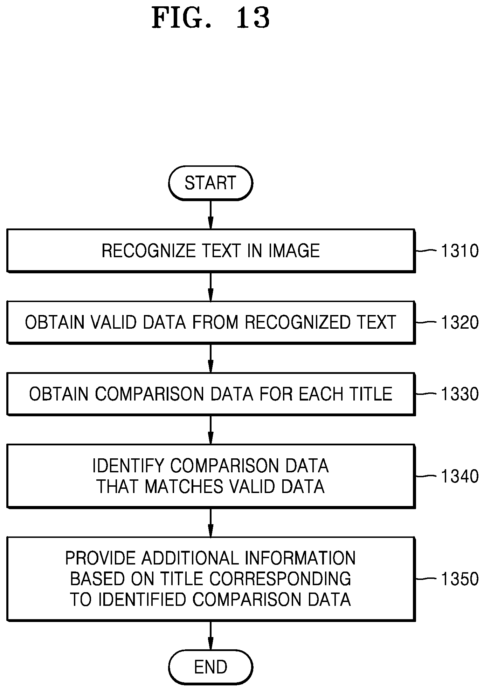

FIG. 13 is a flowchart illustrating a method of operating the electronic device 100, according to an embodiment.

Referring to FIG. 13, at operation 1310, the electronic device 100 may recognize a text in an image.

In an embodiment, the electronic device 100 may capture an image output through the screen of the electronic device 100, at preset time intervals. For example, the electronic device 100 may capture an image output through the screen, every second. In an embodiment, the electronic device 100 may detect a text region in the captured screen. In an embodiment, the electronic device 100 may recognize a text included in the detected text region.

At operation 1320, the electronic device 100 may obtain valid data from the recognized text.

In an embodiment, the electronic device 100 may obtain at least one of first valid data or second valid data, from the recognized text.

At operation 1330, the electronic device 100 may obtain comparison data for each title.

In an embodiment, the electronic device 100 may obtain comparison data for each of a plurality of titles included in a title list. In an embodiment, the electronic device 100 may obtain at least one of first comparison data or second comparison data for each title.

At operation 1340, the electronic device 100 may identify comparison data that matches the valid data.

In an embodiment, the electronic device 100 may obtain first matching information by comparing the first valid data with the first comparison data. In an embodiment, the electronic device 100 may obtain second matching information by comparing the second valid data with the second comparison data. In an embodiment, the electronic device 100 may identify the comparison data that matches the valid data, based on at least one of the first matching information or the second matching information.

At operation 1350, the electronic device 100 may provide additional information based on a title corresponding to the identified comparison data.

In an embodiment, the electronic device 100 may identify the title corresponding to the identified comparison data and transmit the identified title to the server 150. In an embodiment, the electronic device 100 may receive, from the server 150, additional information obtained based on the title and output the additional information.

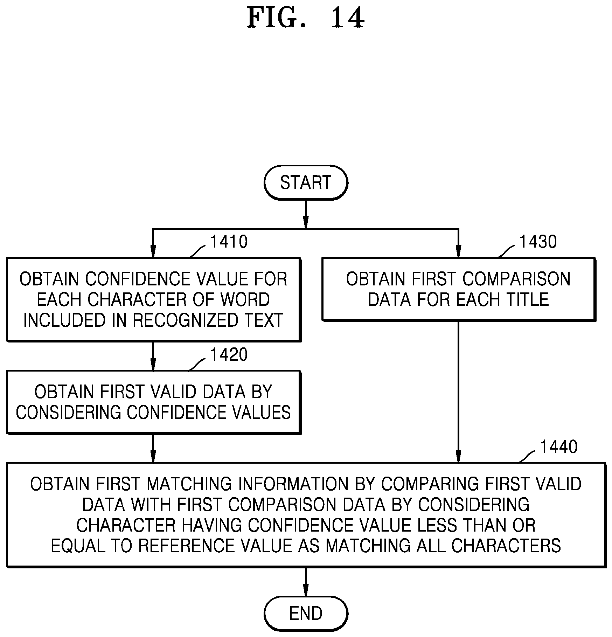

FIG. 14 is a flowchart illustrating a method of comparing first valid data with first comparison data, performed by the electronic device 100, according to an embodiment.

Referring to FIG. 14, at operation 1410 the electronic device 100 may obtain a confidence value for each character of a word included in a recognized text. In an embodiment, the electronic device 100 may obtain a confidence value indicating whether each character of the word is correct.

At operation 1420, the electronic device 100 may obtain first valid data by considering the confidence values.

In an embodiment, the electronic device 100 may obtain the first valid data including one or more words by removing special characters and numeric characters included in the recognized text, converting the characters included in the recognized text to upper case, splitting the recognized text into words by using spaces as separators, and removing words with N or fewer characters.

In an embodiment, the electronic device 100 may obtain the first valid data by substituting a character having a confidence value less than or equal to a reference value with a particular symbol.

At operation 1430, the electronic device 100 may obtain first comparison data for each title.

In an embodiment, the electronic device 100 may obtain the first comparison data including one or more words by removing special characters and numeric characters included in the title, converting characters included in the title to upper case, and removing words with N or fewer characters from among a plurality of words included in the title.

At operation 1440, the electronic device 100 may obtain first matching information by comparing the first valid data with the first comparison data by considering a character having a confidence value less than or equal to the reference value as matching all characters.

In an embodiment, the first matching information may be information indicating a matching degree between the first valid data and the first comparison data.

Thus, in an embodiment, the electronic device 100 may exclude characters having low reliability among characters included in the first valid data, from matching targets. The electronic device 100 may obtain a more accurate matching result by removing a matching error that may occur due to comparison between a character having low reliability with the comparison data.

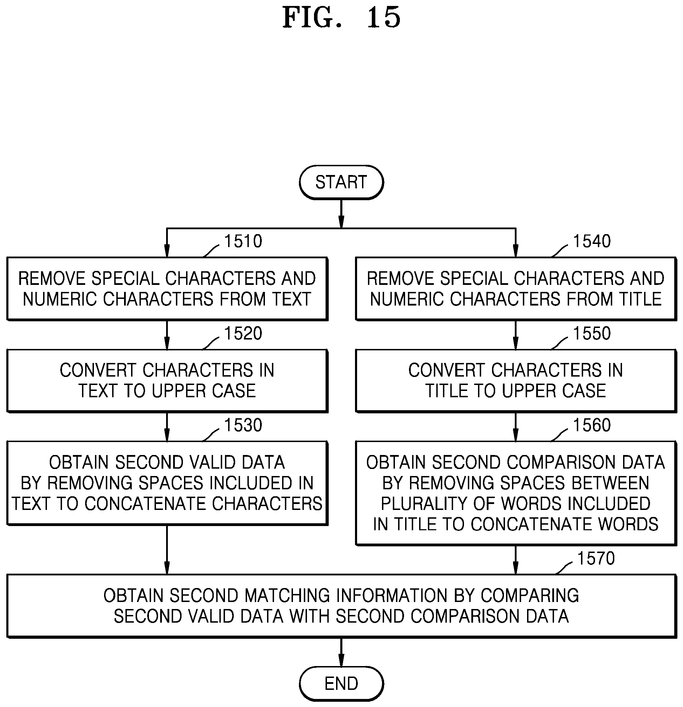

FIG. 15 is a flowchart illustrating a method of comparing second valid data with second comparison data, performed by the electronic device 100, according to an embodiment. The electronic device 100 may obtain second valid data by processing a recognized text.

At operation 1510, the electronic device 100 may remove special characters and numeric characters from the text.

At operation 1520, the electronic device 100 may convert characters in the text to upper case.

At operation 1530, the electronic device 100 may obtain the second valid data by removing spaces included in the text to concatenate characters.

In an embodiment, the electronic device 100 may obtain second comparison data. In an embodiment, the electronic device 100 may obtain second comparison data for each of a plurality of titles.

At operation 1540, the electronic device 100 may remove special characters and numeric characters from the title.

At operation 1550, the electronic device 100 may convert characters in the title to upper case characters.

At operation 1560, the electronic device 100 may obtain the second comparison data by removing spaces between a plurality of words included in the title to concatenate the words.

At operation 1570, the electronic device 100 may obtain second matching information by comparing the second valid data with the second comparison data. In an embodiment, the second matching information may be information indicating a matching degree between the second valid data and the second comparison data.

Thus, in an embodiment, the electronic device 100 may obtain a more accurate matching result by generating second valid data and second comparison data by concatenating all words rather than removing them, and comparing the second valid data with the second comparison data.

An electronic device and an operation method thereof according to an embodiment of the disclosure may be implemented as a recording medium including computer-executable instructions such as a computer-executable program module. A computer-readable medium may be any available medium which is accessible by a computer, and may include a volatile or non-volatile medium and a removable or non-removable medium. Also, the computer-readable medium may include a computer storage medium and a communication medium. The computer storage media include both volatile and non-volatile, removable and non-removable media implemented in any method or technique for storing information such as computer readable instructions, data structures, program modules or other data. The communication media typically include computer-readable instructions, data structures, program modules, other data of a modulated data signal, or other transmission mechanisms, and examples thereof include an arbitrary information transmission medium.

In addition, the electronic device and the operation method thereof according to an embodiment of the disclosure may be implemented with a computer program product including a computer-readable recording medium having recorded thereon a program for implementing an operation method of an electronic device, and the operation method may include recognizing a text in an output image, obtaining valid data from the recognized text, obtaining comparison data for each title of a title list including a plurality of titles, identifying comparison data that matches the valid data from among the obtained comparison data, and providing additional information based on a title corresponding to the identified comparison data.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the non-transitory storage medium may include a buffer in which data is temporarily stored.

The methods according to various embodiments disclosed herein may be included in a computer program product and then provided. The computer program product may be traded as commodities between sellers and buyers. The computer program product may be distributed in the form of a machine-readable storage medium (e.g., a compact disc (CD) ROM (CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

The embodiments of the present disclosure have been shown and described above with reference to the accompanying drawings. The embodiments disclosed in the specification and drawings are only intended to provide specific examples for easily describing the technical content of the disclosure and for assisting understanding of the disclosure, and are not intended to limit the scope of the disclosure. It will be understood by those of ordinary skill in the art that the present disclosure may be easily modified into other detailed forms without changing the technical principle or essential features of the present disclosure, and without departing from the gist of the disclosure as claimed by the appended claims and their equivalents. Therefore, it should be interpreted that the scope of the disclosure includes all changes or modifications derived based on the technical idea of the disclosure in addition to the embodiments disclosed herein.

## Claims

1. An electronic device (100) comprising:
a display (105);
a memory (103) storing at least one instruction; and
at least one processor (101) configured to execute the at least one instruction to:
recognize a text in an image output through the display,
obtain valid data from the recognized text,
obtain comparison data for each title of a plurality of titles in a title list,
identify comparison data that matches the valid data from among the obtained comparison data, and
provide additional information based on a title corresponding to the identified comparison data.

2. The electronic device of claim 1, wherein the valid data comprises at least one of first valid data or second valid data,
wherein the comparison data comprises at least one of first comparison data or second comparison data, and
wherein the at least one processor is further configured to execute the at least one instruction to:
obtain first matching information indicating a matching degree between the first valid data and the first comparison data,
obtain second matching information indicating a matching degree between the second valid data and the second comparison data, and
identify the comparison data that matches the valid data, based on at least one of the first matching information or the second matching information.

3. The electronic device of claim 2, wherein the at least one processor is further configured to execute the at least one instruction to:
obtain the first valid data comprising one or more words, by removing special characters and numeric characters included in the recognized text, converting characters included in the recognized text to upper case, splitting the recognized text into words by using spaces included in the recognized text as separators, and removing words with fewer characters than a predetermined character amount.

4. The electronic device of claim 2 or claim 3, wherein the at least one processor is further configured to execute the at least one instruction to:
obtain a confidence value for each character of a word in the recognized text, the confidence value indicating whether the character is correct,
obtain the first valid data by substituting a character having a confidence value less than or equal to a reference value with a predetermined symbol, and
compare each word included in the first valid data with the first comparison data, by considering the predetermined symbol as matching all characters.

5. The electronic device of claim 4, wherein the at least one processor is further configured to execute the at least one instruction to:
based on an average confidence value of the characters of the word included in the first valid data being greater than or equal to a reference average value, obtain the confidence value for each character of the word.

6. The electronic device of any one of claims 2 to 5, wherein the at least one processor is further configured to execute the at least one instruction to:
obtain the first comparison data comprising one or more words, by removing special characters and numeric characters included in the title, converting characters included in the title to upper case, and removing words with fewer characters than a predetermined character amount, from among a plurality of words included in the title.

7. The electronic device of any one of claims 2 to 6, wherein the at least one processor is further configured to execute the at least one instruction to:
obtain the second valid data by removing special characters and numeric characters included in the recognized text, converting characters included in the recognized text to upper case, and removing spaces included in the recognized text to concatenate remaining characters.

8. The electronic device of any one of claims 2 to 7, wherein the at least one processor is further configured to execute the at least one instruction to:
obtain the second comparison data by removing special characters and numeric characters included in the title, converting characters included in the title to upper case, and removing spaces between a plurality of words included in the title to concatenate the plurality of words.

9. The electronic device of any one of claims 1 to 8, wherein the at least one processor is further configured to execute the at least one instruction to:
remove at least one predetermined character sequence from the recognized text, and
obtain the valid data based on the recognized text from which the at least one predetermined character sequence is removed.

10. The electronic device of any one of claims 1 to 9, further comprising:
a communication unit (107),
wherein the at least one processor is further configured to execute the at least one instruction to:
identify a title corresponding to the identified comparison data,
transmit the corresponding title to a server (150) through the communication unit,
receive additional information corresponding to the corresponding title from the server, and
output the additional information through the display,
wherein the additional information comprises at least one of recommendation information based on the corresponding title or information obtained through a search based on the corresponding title.

11. A method of operating an electronic device, the method comprising:
recognizing a text in an output image;
obtaining valid data from the recognized text;
obtaining comparison data for each title of a plurality of titles in a title list;
identifying comparison data that matches the valid data from among the obtained comparison data; and
providing additional information based on a title corresponding to the identified comparison data.

12. The method of claim 11, wherein the valid data comprises at least one of first valid data or second valid data,
wherein the comparison data comprises at least one of first comparison data or second comparison data, and
wherein the identifying the comparison data that matches the valid data further comprises:
obtaining first matching information indicating a matching degree between the first valid data and the first comparison data;
obtaining second matching information indicating a matching degree between the second valid data and the second comparison data; and
identifying the comparison data that matches the valid data, based on at least one of the first matching information or the second matching information.

13. The method of claim 12, wherein the obtaining the valid data further comprises:
removing special characters and numeric characters included in the recognized text;
converting characters included in the recognized text to upper case;
splitting the recognized text into words by using spaces included in the recognized text as separators; and
obtaining the first valid data by removing words with fewer characters than a predetermined character amount.

14. The method of claim 12 or claim 13, further comprising:
obtaining a confidence value for each character of a word in the recognized text, the confidence value indicating whether the character is correct,
wherein the obtaining the first valid data comprises:
substituting a character having a confidence value less than or equal to a reference value with a predetermined symbol, and
wherein the obtaining the first matching information comprises comparing each word included in the first valid data with the first comparison data, by considering the predetermined symbol as matching all characters.

15. A computer-readable recording medium having recorded thereon a program for causing a computer to execute the operation method of any one of claims 11 to 14
